(19) Europäisches Patentamt
European Patent Office
Office européen des brevets

(11) **EP 3 567 086 B1**

(12) **EUROPÄISCHE PATENTSCHRIFT**

(45) Veröffentlichungstag und Bekanntmachung des Hinweises auf die Patenterteilung:
**18.08.2021 Patentblatt 2021/33**

(51) Int Cl.:
*C09J 7/38* (2018.01)          *C09J 133/08* (2006.01)
*C09J 153/00* (2006.01)        *C08F 220/18* (2006.01)
*C08J 9/32* (2006.01)

(21) Anmeldenummer: **18171236.5**

(22) Anmeldetag: **08.05.2018**

(54) **VERFAHREN ZUR HERSTELLUNG EINER MIT MIKROBALLONS GESCHÄUMTEN SELBSTKLEBEMASSESCHICHT**

METHOD FOR FORMING AN ADHESIVE MASS LAYER FOAMED WITH MICRO BALLOONS

PROCÉDÉ DE FABRICATION D'UNE COUCHE AUTO-ADHÉSIVE EXPANSÉE PAR MICROBALLONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.11.2019 Patentblatt 2019/46**

(73) Patentinhaber: **tesa SE**
**22848 Norderstedt (DE)**

(72) Erfinder:
• **BENDEICH, Ingrid**
**22527 Hamburg (DE)**
• **PETERSEN, Anika**
**24598 Heidmühlen (DE)**
• **LOHMANN, Franciska**
**22523 Hamburg (DE)**
• **BLAZEJEWSKI, Anna**
**22527 Hamburg (DE)**
• **BURMEISTER, Axel**
**22527 Hamburg (DE)**

(74) Vertreter: **tesa SE**
**Hugo-Kirchberg-Straße 1**
**22848 Norderstedt (DE)**

(56) Entgegenhaltungen:
EP-A1- 3 333 235          WO-A1-2017/140801
DE-A1-102015 206 076

## Beschreibung

Die Erfindung betrifft ein Verfahren zur Herstellung einer mit Mikroballons zumindest teilgeschäumten Selbstklebemasseschicht. Sie betrifft ferner ein Klebeband, das mindestens eine Selbstklebemasseschicht umfasst, die nach einem solchen Verfahren erhältlich ist. Außerdem betrifft sie die Verwendung eines solchen Klebebands zur Verklebung von Bauteilen wie insbesondere Akkus und elektronischen Geräten wie insbesondere Mobilgeräten, wie zum Beispiel Handys.

Klebebänder werden häufig für die Verklebung von Kleinstbauteilen beispielsweise in Geräten in der Consumer-Elektronik-Industrie verwendet. Um dies zu ermöglichen, ist es erforderlich, dass die Form des Klebebandabschnittes der Form des Bauteils angepasst ist. Hierbei sind oft auch schwierige Geometrien nötig, welche durch Stanzen des Klebebandes erhalten werden. So sind Stegbreiten bei Stanzteilen von wenigen Millimetern oder sogar weniger keine Seltenheit. Bei der Applikation dieser empfindlichen Klebebänder auf die Bauteile kommt es häufig zur Verformung der Stanzteile.

Um die Verformung zu unterdrücken oder zumindest zu reduzieren, hat es sich als vorteilhaft herausgestellt, in die Klebebänder als mittlere Lage eine Folie, zum Beispiel eine PET-Folie, zu integrieren, um die Zugkräfte bei der Applikation aufzufangen.

Verklebungen mit solchen Klebebändern werden zunehmend auch verwendet, wenn das Bauteil Schockbelastungen ausgesetzt ist. Als besonders schockbeständig haben sich Verklebungen mit Haftklebestreifen herausgestellt, welche einen viskoelastischen, syntaktisch geschäumten Kern, eine stabilisierende Folie und auf den Außenlagen zwei selbstklebende Klebeschichten aufweisen.

Diese Haftklebestreifen sind derart leistungsfähig, dass unter Schockbelastung ein kohäsiver Bruch innerhalb des Haftklebestreifens zu beobachten ist. Die Verbindung zwischen dem geschäumten Kern und der stabilisierenden Folie versagt, und Schaum und Folie lösen sich voneinander.

Geschäumte Haftklebemassensysteme sind seit längerem bekannt und im Stand der Technik beschrieben.

Grundsätzlich lassen sich Polymerschäume auf zwei Wegen herstellen. Zum einen durch die Einwirkung eines Treibgases, sei es als solches zugesetzt oder aus einer chemischen Reaktion resultierend, zum anderen durch die Einarbeitung von Hohlkugeln in die Werkstoffmatrix. Schäume, die auf letzterem Wege hergestellt werden, werden als syntaktische Schäume bezeichnet.

Bei einem syntaktischen Schaum sind Hohlkugeln wie Glaskugeln oder keramische Hohlkugeln (Mikrokugeln) oder Mikroballons in einer Polymermatrix eingebunden. Dadurch sind bei einem syntaktischen Schaum die Hohlräume voneinander getrennt und die in den Hohlräumen befindlichen Substanzen (Gas, Luft) durch eine Membran von der umgebenden Matrix abgetrennt.

Mit Mikrohohlkugeln geschäumte Massen zeichnen sich durch eine definierte Zellstruktur mit einer gleichmäßigen Größenverteilung der Schaumzellen aus. Mit Mikrohohlkugeln werden geschlossenzellige Schäume ohne Kavitäten erhalten, die sich im Vergleich zu offenzelligen Varianten unter anderem durch eine bessere Abdichtungswirkung gegen Staub und flüssige Medien auszeichnen. Darüber hinaus sind chemisch oder physikalisch geschäumte Materialien anfälliger für ein irreversibles Zusammenfallen unter Druck und Temperatur und zeigen häufig eine niedrigere Kohäsionsfestigkeit.

Besonders vorteilhafte Eigenschaften lassen sich erzielen, wenn als Mikrokugeln zur Schäumung expandierbare Mikrokugeln (auch als "Mikroballons" bezeichnet) eingesetzt werden. Durch ihre flexible, thermoplastische Polymerschale besitzen derartige Schäume eine höhere Anpassungsfähigkeit als solche, die mit nicht expandierbaren, nicht polymeren Mikrohohlkugeln (beispielsweise Glashohlkugeln) gefüllt sind. Sie eignen sich besser zum Ausgleich von Fertigungstoleranzen, wie sie zum Beispiel bei Spritzgussteilen die Regel sind, und können aufgrund ihres Schaumcharakters auch thermische Spannungen besser kompensieren.

Des Weiteren können durch die Auswahl des thermoplastischen Harzes der Polymerschale die mechanischen Eigenschaften des Schaums weiter beeinflusst werden. So ist es beispielsweise möglich, selbst dann, wenn der Schaum eine geringere Dichte als die Matrix aufweist, Schäume mit höherer Kohäsionsfestigkeit als mit der Polymermatrix allein herzustellen. So können typische Schaumeigenschaften wie die Anpassungsfähigkeit an raue Untergründe mit einer hohen Kohäsionsfestigkeit für selbstklebende Schäume kombiniert werden.

Zu den Geräten in der Consumer-Elektronik-Industrie zählen elektronische, optische und feinmechanische Geräte im Sinne dieser Anmeldung insbesondere solche Geräte, wie sie in Klasse 9 der Internationalen Klassifikation von Waren und Dienstleistungen für die Eintragung von Marken (Klassifikation von Nizza); 10. Ausgabe (NCL(10-2013)); einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere

- Wissenschaftliche, Schifffahrts-, Vermessungs-, fotografische, Film-, optische, Wäge-, Mess-, Signal-, Kontroll-, Rettungs- und Unterrichtsapparate und -instrumente;
- Apparate und Instrumente zum Leiten, Schalten, Umwandeln, Speichern, Regeln und Kontrollieren von Elektrizität;

- Bildaufzeichnungs-, -verarbeitungs-, -übertragungs- und -wiedergabegeräte, wie beispielsweise Fernseher und dergleichen
- Akustische Aufzeichnungs-, Verarbeitungs-, -übertragungs- und - wiedergabegeräte, wie beispielsweise Rundfunkgeräte und dergleichen
- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte
- Fernkommunikations- und Multifunktionsgeräte mit Fernkommunikationsfunktion, wie beispielsweise Telefone, Anrufbeantworter
- Chemische und physikalische Messgeräte, Steuergeräte und Instrumente, wie beispielweise Akkumulatorladegeräte, Multimeter, Lampen, Tachometer
- Nautische Geräte und Instrumente
- Optische Geräte und Instrumente
- Medizinische Geräte und Instrumente und solche für Sportler
- Uhren und Chronometer
- Solarzellenmodule, wie etwa elektrochemische Farbstoff-Solarzellen, organische Solarzellen, Dünnschichtzellen,
- Feuerlöschgeräte.

Die technische Entwicklung richtet sich vermehrt auf solche Geräte, die immer kleiner und leichter gestaltet werden, damit sie von ihrem Besitzer jederzeit mitgeführt werden können und üblicherweise regelmäßig mitgeführt werden. Dies geschieht heute zunehmend durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärkerer Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden.

Die Erfindung bezieht sich dementsprechend besonders bevorzugt auf Mobilgeräte, da der erfindungsgemäß eingesetzte Haftklebestreifen hier aufgrund der unerwartet guten, nämlich nochmals verbesserten, Eigenschaften (sehr hohe Schockresistenz) einen besonderen Nutzen hat. Nachfolgend sind einige portable Geräte aufgeführt, ohne sich durch die konkret genannten Vertreter in dieser Liste bezüglich dem Gegenstand der Erfindung unnötig beschränken zu wollen.

- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras
- Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads")
- Monitore, Displays, Bildschirme, berührungsempfindliche Bildschirme (Sensorbildschirme, "Touchscreen-Geräte"), Beamer
- Lesegeräte für elektronische Bücher ("E-Books"),
- Kleinfernsehgeräte, Taschenfernseher, Filmabspielgeräte, Videoabspielgeräte
- Radios (auch Klein- und Taschenrundfunkgeräte), Walkmen, Discmen, Musikabspielgeräte für zum Beispiel CD, DVD, Bluray, Kassetten, USB, MP3, Kopfhörer
- Schnurlose Telefone, Mobiltelefone, Smartphones, Funksprechgeräte, Freisprechgeräte, Personenrufgeräte (Pager, Pieper)
- Mobile Defibrillatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte
- GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

Für diese Geräte sind insbesondere Klebebänder gefordert, die eine hohe Halteleistung besitzen.

Des Weiteren ist wichtig, dass die Klebebänder in ihrer Halteleistung nicht versagen, wenn das Mobilgerät, zum Beispiel ein Handy, fallengelassen wird und auf den Untergrund aufprallt. Der Klebestreifen muss also eine sehr hohe Schockresistenz aufweisen.

Die EP 2 832 780 A1 betrifft einen druckempfindlichen Klebeschaum, der ein Gummielastomer, mindestens einen Kohlenwasserstoff-Klebrigmacher und einen Vernetzer ausgewählt aus der Gruppe der multifunktionellen (Meth)Acrylatverbindungen enthält.

Die JP 2010/070,655 A betrifft eine Zusammensetzung, die ein Styrol-basiertes thermoplastisches Elastomer (A), einen Klebrigmacher (B) und wärmeexpandierbares mikrokapselartiges Schäumungsagenz enthält.

Die DE 10 2008 056 980 A1 betrifft eine Selbstklebemasse bestehend aus einem Gemisch enthaltend:

- einen Polymerblend aus thermoplastischen und/oder nicht-thermoplastischen Elastomeren mit mindestens einem Vinylaromatenblockcopolymer, das einen Anteil größer 30 Gew.-% an 1,2-verknüpftem Dien im Elastomerblock enthält,
- mindestens ein Klebharz
- expandierte polymere Mikrokugeln.

Die WO 2009/090119 A1 betrifft eine druckempfindliche Klebemasse, die expandierte Mikroballons enthält, wobei die Klebkraft der die expandierten Mikroballons enthaltenden Klebemasse im Vergleich zu der Klebkraft einer flächengewichts- und rezepturidentischen Klebemasse, die durch die Zerstörung der durch die expandierten Mikroballons entstandenen Hohlräume entschäumt ist, um höchstens 30 % reduziert ist.

Die WO 2003/011954 A1 betrifft einen geschäumten Haftklebstoffgegenstand, wobei der Gegenstand a) ein Polymergemisch, enthaltend mindestens ein styrolisches Blockcopolymer und mindestens ein Polyarylenoxid, und b) ein oder mehrere schaumfähige Polymermikrokügelchen umfasst.

WO 00/006637 A1 betrifft einen Gegenstand enthaltend einen Polymerschaum mit einer im Wesentlichen glatten Oberfläche mit einem $R_a$-Wert von weniger als etwa 75 $\mu$m, wobei der Schaum eine Vielzahl von Mikrokugeln enthält, von denen zumindest eine eine expandierbare polymere Mikrokugel ist.

WO 2010/147888 A2 betrifft einen Schaumstoff umfassend ein Polymer, mehrere mindestens teilweise expandierte expandierbare Polymermikrokugeln und 0,3 bis 1,5 Gew.-% eines Siliziumdioxids mit einer Oberfläche von mindestens 300 Quadratmeter pro Gramm gemäß ASTM D1993-03 (2008).

Die DE 10 2015 206 076 A1 betrifft einen Haftklebstreifen, der sich durch dehnendes Verstrecken im Wesentlichen in der Verklebungsebene rückstands- und zerstörungsfrei wieder ablösen lässt, aus einer oder mehreren Klebemassenschichten, die allesamt aus einer Haftklebemasse bestehen, die mit Mikroballons geschäumt ist, und gegebenenfalls aus einer oder mehreren Zwischenträgerschichten, dadurch gekennzeichnet, dass der Haftklebestreifen ausschließlich aus den genannten Klebemassenschichten und gegebenenfalls vorhandenen Zwischenträgerschichten besteht und die eine äußere obere und eine äußere untere Fläche des Haftklebestreifens von der oder den genannten Klebemassenschichten gebildet werden. Der wiederablösbare Haftklebestreifen zeichnet sich durch seine ausgeprägte Schockresistenz aus.

Die DE 10 2016 202 479 A1 beschreibt ein vierschichtiges Klebeband, bei dem eine geschäumte innenliegende Schicht zusätzlich durch eine PET-Stabilisierungsfolie verstärkt wird. Durch einen solchen Aufbau konnten besonders schockresistente Klebebänder angeboten werden.

Die DE 10 2016 209 707 A1 beschreibt einen Haftklebestreifen aus drei Schichten, umfassend eine innenliegende Schicht F aus einem nichtdehnbaren Folienträger, eine Schicht SK1 aus einer selbstklebenden Masse, die auf einer der Oberflächen der Folienträgerschicht F angeordnet ist und die auf einer geschäumten Acrylatmasse basiert, und eine Schicht SK2 aus einer selbstklebenden Masse, die auf der der Schicht SK1 gegenüberliegenden Oberfläche der Folienträgerschicht F angeordnet ist und die auf einer geschäumten Acrylatmasse basiert. Durch einen solchen Aufbau konnten ebenfalls besonders schockresistente Klebebänder angeboten werden.

Die DE 10 2016 207 822 A1 betrifft eine Selbstklebemasse bestehend aus einem Gemisch enthaltend Kautschuk, insbesondere Naturkautschuk, mindestens ein Klebharz, wobei der Anteil der Klebharze bei 40 bis 130 phr liegt, und expandierte polymere Mikrokugeln. Die Selbstklebemasse weist eine geringere Dichte als übliche Klebemassen auf, zeigt eine ausreichende Klebkraft, ist typischerweise rückstandsfrei wiederablösbar und zeigt eine Verbesserung der Flammfestigkeit.

Die noch unveröffentlichte EP 17 182 443 desselben Anmelders wie dieser Schrift betrifft einen Haftklebestreifen aus zumindest drei Schichten, umfassend eine innenliegende Schicht F aus einem nichtdehnbaren Folienträger, eine Schicht SK1 aus einer selbstklebenden Masse, die auf einer der Oberflächen der Folienträgerschicht F angeordnet ist und die auf einer mit Mikroballons geschäumten Vinylaromatenblockcopolymer-Masse basiert, und eine Schicht SK2 aus einer selbstklebenden Masse, die auf der der Schicht SK1 gegenüberliegenden Oberfläche der Folienträgerschicht F angeordnet ist und die auf einer mit Mikroballons geschäumten Vinylaromatenblockcopolymer-Masse basiert, wobei der mittlere Durchmesser der von den Mikroballons gebildeten Hohlräume in den Selbstklebemasseschichten SK1 und SK2 jeweils unabhängig voneinander 20 bis 60 $\mu$m beträgt. Der Haftklebestreifen verfügt über eine hohe Schockresistenz.

Die ebenfalls noch unveröffentlichte EP 17 182 447 desselben Anmelders wie dieser Schrift betrifft einen Haftklebestreifen, der zumindest eine Schicht SK1 aus einer selbstklebenden Masse umfasst, die auf einer mit Mikroballons geschäumten Vinylaromatenblockcopolymer-Masse basiert, wobei der mittlere Durchmesser der von den Mikroballons gebildeten Hohlräume in der Selbstklebemasseschicht SK1 45 bis 110 $\mu$m beträgt. Der Haftklebestreifen verfügt insbesondere über eine verbesserte Wärmescherfestig keit.

Die ebenfalls noch unveröffentlichte DE 10 2018 200 957 desselben Anmelders wie dieser Schrift betrifft einen Haftklebestreifen, der zumindest eine Schicht SK1 aus einer selbstklebenden mit Mikroballons teilgeschäumten Masse umfasst, wobei der Schäumungsgrad der Schicht SK1 mindestens 20% und weniger als 100% beträgt, ein Verfahren zu dessen Herstellung sowie dessen Verwendung zur Verklebung von Bauteilen wie insbesondere Akkus und elektronischen Geräten wie insbesondere Mobilgeräten. Der Haftklebestreifen verfügt über eine hohe Schockresistenz.

In den folgenden beiden Schriften werden Verfahren beschrieben, welche in der Lage sind geeignete geschäumte Haftklebestreifen zu erzeugen.

Die WO 2009/090119 A1 betrifft eine druckempfindliche Klebemasse, die expandierte Mikroballons enthält, wobei die Klebkraft der die expandierten Mikroballons enthaltenden Klebemasse im Vergleich zu der Klebkraft einer flächengewichts- und rezepturidentischen Klebemasse, die durch die Zerstörung der durch die expandierten Mikroballons entstandenen Hohlräume entschäumt ist, um höchstens 30 % reduziert ist. Hierbei wird eine zumindest teilgeschäumte Haftklebemasse zwischen zwei Linern mittels zumindest zwei Walzen ausgeformt. Der hohe Druck im Walzenspalt drückt die durch die Oberfläche brechenden Mikroballons in die Polymermatrix zurück um eine glatte Oberfläche ohne störende durchgebrochene Mikroballons zu erzeugen.

WO 00/006637 A1 betrifft einen Gegenstand enthaltend einen Polymerschaum mit einer im Wesentlichen glatten Oberfläche mit einem $R_a$-Wert von weniger als etwa 75 $\mu$m, wobei der Schaum eine Vielzahl von Mikrokugeln enthält, von denen zumindest eine eine expandierbare polymere Mikrokugel ist. Diese Schrift lehrt die Expansion der Mikroballons im Düsenspalt einer Extrusionsdüse. Hier wird der hohe Druck in der Düse genutzt um die expandierenden Mikroballons in die Polymermatrix zu drücken.

Beide Verfahren eignen sich ausschließlich für lösungsmittelfreie Selbstklebemassen.

Die WO 2017/140801 A1 betrifft einen Haftklebestreifen aus mindestens vier, insbesondere genau vier Schichten, umfassend

- eine Schicht A mit einer Ober- und einer Unterseite aus einer geschäumten Klebemasse, die auf einer selbstklebenden Acrylatmasse basiert,
- eine Schicht B aus einem Folienträger, wobei die Schicht B auf der Unterseite der Schicht A angeordnet ist, wobei zumindest die der Schicht A zugewandte Hauptfläche, vorzugsweise beide Hauptflächen des Folienträgers geätzt sind, wobei die Oberfläche der Schicht A und die Oberfläche der Schicht B in direktem Kontakt miteinander stehen,
- eine Schicht C aus einer selbstklebenden Masse, die auf der Oberseite der Schicht A angeordnet ist und die auf einer selbstklebenden Acrylatmasse basiert,
- eine Schicht D aus einer selbstklebenden Masse, die auf der der Schicht A gegenüberliegenden Seite der Schicht B angeordnet ist und die auf einer selbstklebenden Acrylatmasse basiert.

Die EP 3 333 235 A1 betrifft einen Haftklebestreifen aus zumindest drei Schichten, umfassend

- eine innenliegende Schicht F aus einem nichtdehnbaren Folienträger,
- eine Schicht SK1 aus einer selbstklebenden Masse, die auf einer der Oberflächen der Folienträgerschicht F angeordnet ist und die auf einer mit Mikroballons geschäumten Vinylaromatenblockcopolymer-Masse basiert,
- eine Schicht SK2 aus einer selbstklebenden Masse, die auf der der Schicht SK1 gegenüberliegenden Oberfläche der Folienträgerschicht F angeordnet ist und die auf einer mit Mikroballons geschäumten Vinylaromatenblockcopolymer-Masse basiert, wobei der mittlere Durchmesser der von den Mikroballons gebildeten Hohlräume in den Selbstklebemasseschichten SK1 und SK2 jeweils unabhängig voneinander 20 bis 60 $\mu$m beträgt.

Aufgabe der vorliegenden Erfindung gegenüber dem Stand der Technik ist es, ein Verfahren zur Herstellung einer geschäumten Selbstklebemasseschicht bereitzustellen, typischerweise aus Lösung, bei dem der Schäumungsvorgang bei Atmosphärendruck stattfinden kann, wobei die geschäumte Selbstklebemasseschicht eine hohe Schockresistenz aufweisen soll.

Die Aufgabe wird überraschenderweise durch ein Verfahren gelöst, wie es im Hauptanspruch 1 beschrieben ist. Vorteilhafte Ausführungsformen des Verfahrens finden sich in den Unteransprüchen.

Demgemäß betrifft die Erfindung ein Verfahren zur Herstellung einer mit Mikroballons zumindest teilgeschäumten Selbstklebemasseschicht einer Oberflächenrauigkeit $R_a$ von weniger als 3 $\mu$m, bei dem eine schäumbare Selbstklebemasseschicht enthaltend expandierbare Mikroballons, die zwischen

(i) zwei Linern,

(ii) einem Liner und einem Träger, oder

(iii) einem Liner und einer weiteren Selbstklebemasseschicht, die (a) nicht schäumbar ist oder (b) schäumbar ist, wobei sie typischerweise expandierbare Mikroballons enthält,

angeordnet ist, durch geeigneten Energieeintrag bei einer zur Schäumung geeigneten Temperatur für einen solchen Zeitraum wärmebehandelt wird, dass nach dem anschließenden Abkühlen der Schicht der gewünschte Schäumungsgrad erreicht wird,

dadurch gekennzeichnet, dass

die schäumbare Selbstklebemasseschicht basiert auf

(i) einer Acrylatmasse oder

(ii) einem Blend von Acrylat und Synthesekautschuk wie zum Beispiel Vinylaromatenblockcopolymer, wobei bezogen auf die Gesamtheit von 100 Gew.-% an Acrylatkomponente und Synthesekautschukkomponente die Acrylatkomponente in einem Anteil von 60 Gew.-% bis 90 Gew.-% und die Synthesekautschukkomponente in einem Anteil von 10 Gew.-% bis 40 Gew.-% vorliegt,

die beiden Liner oder der Liner während der Schäumung vollständig auf der jeweiligen Oberfläche der schäumbaren Selbstklebemasseschicht, auf der sie angeordnet sind, haften bleiben,

wobei die beiden Liner unabhängig voneinander oder der Liner während der Schäumung gewichtsstabil sind, und insbesondere während der Schäumung weniger als 2 %, beispielsweise weniger als 1 % Gewicht verlieren, beispielsweise in Form von Wasser,

wobei der Schrumpf der beiden Liner unabhängig voneinander oder des Liners während der Schäumung sowohl in Quer-, als auch in Längsrichtung weniger als 2%, bevorzugter weniger als 1%, und noch bevorzugter weniger als 0,5% beträgt und insbesondere weder in Quer-, noch in Längsrichtung ein Schrumpf der Liner oder des Liners während der Schäumung festzustellen ist, und

wobei die beiden Liner unabhängig voneinander oder der Liner Polyester-Liner sind, die zumindest einseitig antiadhäsiv beschichtet sind, wobei die beiden Liner oder der Liner eine Dicke von 50 bis 75 μm aufweisen.

Das erfindungsgemäße Verfahren bringt somit eine zumindest teilgeschäumte Selbstklebemasseschicht hervor, die gegenüber einer nach einem Verfahren gemäß dem Stand der Technik hergestellten Selbstklebemasseschicht eine verbesserte Schockresistenz aufweist. Typischerweise weist die zumindest teilgeschäumte Selbstklebemasseschicht eine Oberflächenrauigkeit $R_a$ von weniger als 2 μm, und insbesondere von weniger als 1 μm. Gemessen wird $R_a$ in der vorliegenden Anmeldung mittels Lasertriangulation. Geringe Oberflächenrauigkeiten haben insbesondere den Vorteil, dass sich eine verbesserte Schockresistenz des Haftklebestreifens ergibt. Ferner ergeben sich typischerweise verbesserte Klebkräfte.

Die vorliegende Erfindung betrifft ferner ein Klebeband, das mindestens eine mit Mikroballons zumindest teilgeschäumte Selbstklebemasseschicht umfasst, die nach einem solchen Verfahren erhältlich ist.

Außerdem betrifft die vorliegende Erfindung die Verwendung eines solchen Klebebands zur Verklebung von Bauteilen wie insbesondere Akkus und elektronischen Geräten wie insbesondere Mobilgeräten, wie zum Beispiel Handys.

In der vorliegenden Anmeldung ist unter einem Träger ein permanenter Träger zu verstehen. Ein permanenter Träger ist fest mit der jeweiligen Klebeschicht verbunden. Dies bedeutet, dass er sich nach der Anordnung der Klebeschicht auf der Trägeroberfläche nicht mehr von der Klebeschicht trennen lässt, ohne dass der Träger und/oder die Klebeschicht beschädigt wird, wie zum Beispiel deformiert wird. Unbeschadet davon kann der permanente Träger auf der der Klebeschicht abgewandten Seite antiadhäsiv beschichtet sein, beispielsweise um ein sich ergebendes Klebeband aufrollen zu können.

Im Gegensatz dazu ist in der vorliegenden Anmeldung unter einem Liner ein temporärer Träger zu verstehen. Ein Liner ist also im Gegensatz zu einem (permanenten) Träger nicht fest mit einer Klebeschicht verbunden. Dabei kann entweder das eigentliche Linermaterial als solches bereits antiadhäsiv sein, oder aber es ist zumindest einseitig, vorzugsweise beidseitig, antiadhäsiv beschichtet, wie zum Beispiel silikonisiert. Ein Liner wie zum Beispiel ein Trennpapier oder eine Trennfolie ist nicht Bestandteil eines Haftklebestreifens, sondern nur ein Hilfsmittel zu dessen Herstellung, Lagerung und/oder für die Weiterverarbeitung durch Stanzen.

Erfindungsgemäß gibt es somit auch Träger, die je nachdem, auf welcher Seite die Klebeschicht aufgebracht wird, als temporärer Träger (Liner) oder aber als permanenter Träger (d.h. Träger im Sinne der Anmeldung) fungieren. Weist ein Träger nur eine einzige antiadhäsive Oberfläche auf, während die gegenüberliegende Oberfläche nicht antiadhäsiv ist (z.B. ein einseitig silikonisierter PET-Träger), so fungiert er bei Aufbringung der Klebeschicht auf die antiadhäsive Oberfläche als Liner, während er bei Aufbringung der Klebeschicht auf die nicht antiadhäsive Oberfläche als Träger fungiert.

In der vorliegenden Anmeldung ist unter "Anordnung" einer schäumbaren Selbstklebemasseschicht zwischen zwei Linern, einem Liner und einem Träger, oder einem Liner und einer weiteren Selbstklebemasseschicht eine Anordnung gemeint, bei der die schäumbare Selbstklebemasseschicht in direktem Kontakt mit der Oberfläche des Liners, des Trägers bzw. der weiteren Selbstklebemasseschicht steht.

Gemäß der vorliegenden Anmeldung werden die Begriffe "Haftklebemasse" und "Selbstklebemasse" (PSA; englisch: "pressure sensitive adhesives") synonym verwendet. Gleiches gilt für die Begriffe "Klebestreifen" und "Klebeband". Der allgemeine Ausdruck "Klebestreifen" (Haftklebestreifen) bzw. "Klebeband" (Haftklebeband) umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten. Eine typische Konfektionierform ist außerdem eine Klebebandrolle.

Die schäumbare Selbstklebemasseschicht wird in einer bevorzugten Ausführungsform zwischen (i) zwei Linern angeordnet, indem eine Selbstklebemasse enthaltend expandierbare Mikroballons aus einer Lösung auf einen ersten Liner aufgebracht und unterhalb der Schäumungstemperatur getrocknet wird, und auf die dem ersten Liner gegenüberliegende Oberfläche der getrockneten Selbstklebemasseschicht ein zweiter Liner kaschiert wird.

In einer weiteren bevorzugten Ausführungsform wird die schäumbare Selbstklebemasseschicht zwischen (ii) einem Liner und einem Träger angeordnet, indem eine Selbstklebemasse enthaltend expandierbare Mikroballons aus einer Lösung auf einen Liner oder Träger aufgebracht und unterhalb der Schäumungstemperatur getrocknet wird, und auf die dem Liner oder Träger gegenüberliegende Oberfläche der getrockneten Selbstklebemasseschicht ein Träger oder Liner kaschiert wird.

In einer weiteren bevorzugten Ausführungsform wird die schäumbare Selbstklebemasseschicht zwischen (iii) einem Liner und einer weiteren Selbstklebemasseschicht angeordnet, indem eine Selbstklebemasse enthaltend expandierbare Mikroballons aus einer Lösung auf einen Liner aufgebracht und unterhalb der Schäumungstemperatur getrocknet wird, und auf die dem Liner gegenüberliegende Oberfläche der getrockneten Selbstklebemasseschicht eine, typischerweise auf einen Liner oder Träger aufgebrachte, weitere Selbstklebemasseschicht kaschiert wird.

Die weitere Selbstklebemasseschicht kann dabei (a) eine nicht schäumbare Selbstklebemasseschicht sein. In diesem Fall liegt die weitere Selbstklebemasseschicht nach Durchführung des erfindungsgemäßen Verfahrens dementsprechend als ungeschäumte Selbstklebemasseschicht vor.

Alternativ kann die weitere Selbstklebemasseschicht (b) ebenfalls eine schäumbare Selbstklebemasseschicht sein, wobei die Selbstklebemasseschicht typischerweise expandierbare Mikroballons enthält. Durch einen solchen Aufbau lassen sich nach dem Schäumen höhere Schichtdicken erzeugen und das resultierende Produkt weist deutlich weniger optisch wahrnehmbare Defekte auf, wie Pinholes oder Farbnuancen. Üblicherweise wird im erfindungsgemäßen Verfahren die weitere Selbstklebemasseschicht unter den gleichen Bedingungen und somit im gleichen Verfahrensschritt geschäumt wie die benachbarte schäumbare Selbstklebemasseschicht.

Die bevorzugten Ausführungsformen der schäumbaren Selbstklebemasseschicht enthaltend expandierbare Mikroballons sowie der sich im erfindungsgemäßen Verfahren daraus ergebenden zumindest teilgeschäumten Selbstklebemasseschicht gelten erfindungsgemäß, sofern nicht anders angegeben, auch für die weitere Selbstklebemasseschicht vor und nach der Schäumung.

Die chemische Zusammensetzung der schäumbaren Selbstklebemasseschicht und der weiteren Selbstklebemasseschicht kann identisch oder unterschiedlich sein, vorzugsweise ist sie identisch. Auch kann die Dicke der schäumbaren Selbstklebemasseschicht und der weiteren Selbstklebemasseschicht identisch oder unterschiedlich sein, vorzugsweise ist sie identisch.

Alternativ kann außerdem die schäumbare Selbstklebemasseschicht zwischen (i) zwei Linern, (ii) einem Liner und einem Träger, oder (iii) einem Liner und einer weiteren Selbstklebemasseschicht angeordnet werden, indem die beiden Liner, der Liner und der Träger, oder der Liner und die, typischerweise auf einen Liner oder Träger aufgebrachte, weitere Selbstklebemasseschicht auf die schäumbare Selbstklebemasseschicht kaschiert werden. Diese Alternative ermöglicht beispielsweise den Austausch von Linern durch andere Liner bzw. durch Träger und/oder weitere Selbstklebemasseschichten nach der Herstellung einer schäumbaren Selbstklebemasseschicht, d.h. vor der Schäumung.

Das Kaschieren erfolgt dabei jeweils vorzugsweise ohne Lufteinschlüsse.

Setzt man eine Selbstklebemasseschicht enthaltend expandierbare Mikroballons, im Sinne der vorliegenden Erfindung auch als schäumbare Selbstklebemasseschicht bezeichnet, einer geeigneten erhöhten Temperatur aus, so expandieren die Mikroballons, wodurch die Schicht schäumt. Durch Erhitzung der Mikroballons steigt der Innendruck des darin enthaltenen Treibmittels und bei weiterer Temperaturerhöhung erweicht die Hülle, woraufhin die Mikroballons expandieren. Wird die Temperatur konstant gehalten oder weiter erhöht, führt dies durch die fortwährende Expansion zu einer immer dünner werdenden Hülle und immer größeren Mikroballon-Durchmessern. Es ist eine Vielzahl an unexpandierten (und somit expandierbaren) Mikroballontypen kommerziell erhältlich, welche sich im Wesentlichen über ihre Größe und ihre zur Expansion benötigten Starttemperaturen (75 bis 220 °C) differenzieren. Der Fachmann weiß, dass die zur Schäumung gewählte Temperatur neben dem Mikroballontyp ferner von der gewünschten Schäumungsgeschwindigkeit abhängt. Die absolute Dichte der Schicht nimmt durch die fortwährende Schäumung über einen gewissen Zeitraum ab. Der Zustand der geringsten Dichte wird als Vollexpansion, Vollschäumung, 100% Expansion bzw. 100% Schäumung definiert. Üblicherweise werden die Mikroballon-haltigen Schichten vollexpandiert, da man dabei davon ausgeht, die erwünschten Eigenschaften der Schichten mit einem möglichst geringen Mikroballonanteil zu erreichen bzw. die Eigenschaften der Schichten bei gegebenem Mikroballonanteil zu optimieren. Die Vollexpansion gilt daher als ökonomisch bzw. technisch vorteilhaft. Anschließend schrumpfen die expandierten Mikroballons bei der gewählten Schäumungstemperatur jedoch wieder zusammen und ein überexpandierter Zustand wird erreicht, wobei die Dichte der Schicht im überexpandierten Zustand wieder größer ist. Grund für die Überexpansion ist, dass das Treibmittel beginnt, zunehmend durch die Hülle zu diffundieren und im umgebenden Polymer freie Gasblasen zu bilden. Die Überexpansion ist unerwünscht, insbesondere da sich das austretende Gas im umgebenden Polymer sammelt und dort mit zunehmender Zeit immer größere freie Gasblasen bildet, welche die Kohäsion reduzieren. Außerdem diffundieren diese freien Gase mit der Zeit durch das umgebende Polymer in die Umgebung, und das Polymer verliert an Schaumanteil.

Erfindungsgemäß muss es sich bei der schäumbaren Selbstklebemasseschicht enthaltend expandierbare Mikroballons nicht zwingend um eine Selbstklebemasseschicht enthaltend unexpandierte Mikroballons handeln. Alternativ kann als schäumbare Selbstklebemasseschicht auch eine Selbstklebemasseschicht eingesetzt werden, die bereits teilgeschäumt ist und somit expandierbare Mikroballons enthält. In letzterem Fall wird eine teilgeschäumte, und somit schäumbare, Selbstklebemasseschicht einer weiteren Schäumung unterzogen.

Wird die Selbstklebemasseschicht im erfindungsgemäßen Verfahren vor Erreichen der Vollschäumung abgekühlt, so kommt die Expansion der Mikroballons zum Erliegen und mit ihr die Abnahme der Schichtdichte. Der Begriff "Abkühlen" umfasst hier und im Folgenden auch das passive Abkühlenlassen durch Entfernen der Beheizung, d.h. typischerweise eine Abkühlung bei Raumtemperatur (20 °C). Ferner umfasst der Begriff "Abkühlen" erfindungsgemäß auch das Erhitzen bei geringerer Temperatur. Es ergibt sich eine teilgeschäumte Schicht. Der Prozess der Schäumung mittels Mikroballons ermöglicht durch geeignete Wahl der Parameter Temperatur und Zeit eine stufenlose Einstellung des Expansionsgrades der Mikroballons, was selbstverständlich auch einen Expansionsgrad von 100%, d.h. eine Vollschäumung, einschließt. Der zur Erzielung des gewünschten Expansionsgrades erforderliche Energieeintrag hängt außerdem von der Dicke der zu schäumenden Klebeschicht ab, wobei mit zunehmender Dicke ein höherer Energieeintrag erforderlich ist. In der Praxis werden typischerweise die verschiedenen Parameter solange iterativ verändert, bis der gewünschte Schäumungsgrad erzielt wird.

Der Schäumungsgrad (Expansionsgrad) der teilgeschäumten Schicht lässt sich nun wie folgt berechnen:

Schäumungsgrad = (Dichte der Schicht enthaltend unexpandierte Mikroballons minus Dichte der teilgeschäumten Schicht) / (Dichte der Schicht enthaltend unexpandierte Mikroballons minus Dichte der vollgeschäumten Schicht).

Der Schäumungsgrad ist somit der Quotient aus

(i) der Differenz der Dichte der Schicht enthaltend unexpandierte Mikroballons und der Dichte der teilgeschäumten Schicht, und

(ii) der Differenz der Dichte der Schicht enthaltend unexpandierte Mikroballons und der Dichte der vollgeschäumten Schicht.

Alternativ zur Bestimmung des Schäumungsgrades über die Dichten der ungeschäumten, teilgeschäumten und vollgeschäumten Schicht lässt sich der Schäumungsgrad analog auch über die Dicken der ungeschäumten, teilgeschäumten und vollgeschäumten Schicht bestimmen.

Der Schäumungsgrad wird in diesem Fall ermittelt als der Quotient aus

(i) der Differenz der Dicke der teilgeschäumten Schicht und der Dicke der Schicht enthaltend unexpandierte Mikroballons, und

(ii) der Differenz der Dicke der vollgeschäumten Schicht und der Dicke der Schicht enthaltend unexpandierte Mikroballons.

Bei der Schicht enthaltend unexpandierte Mikroballons, der teilgeschäumten Schicht und der vollgeschäumten Schicht handelt es sich in diesen Berechnungsformeln selbstverständlich um flächengewichts- und rezepturidentische Schichten, d.h. die teilgeschäumte sowie die vollgeschäumte Schicht können durch die Schäumung der Schicht enthaltend unexpandierte Mikroballons bei einer geeigneten Temperatur und für eine geeignete Zeit bereitgestellt werden.

Der Schäumungsgrad einer teilgeschäumten Schicht lässt sich alternativ auch im Nachhinein ermitteln, d.h. ausgehend vom bereits fertigen teilgeschäumten Produkt. Auch hier kann eine der vorstehenden Berechnungsformeln verwendet werden. Die vollgeschäumte Schicht kann dabei durch Nachschäumung der teilgeschäumten Schicht bei einer geeigneten Temperatur und für eine geeignete Zeit bereitgestellt werden. An die Stelle der Schicht enthaltend unexpandierte Mikroballons tritt in den Berechnungsformeln allerdings jeweils jene flächengewichts- und rezepturidentische Schicht, die durch die Zerstörung der durch die expandierten Mikroballons entstandenen Hohlräume der teilgeschäumten Schicht entschäumt ist. Um die aufgeschäumten Mikroballons der teilgeschäumten Schicht zu zerstören, wird das zu untersuchende Muster unter Vakuum gepresst. Die Parameter der Presse sind dabei wie folgt:

- Temperatur: typischerweise mindestens 30 K oberhalb der Schäumungstemperatur, wie zum Beispiel 150 °C
- Anpresskraft: 10 kN
- Vakuum: - 0,9 bar (d.h. 0,9 bar Unterdruck bzw. 100 mbar Restdruck)
- Presszeit: 90 s

Der Schäumungsgrad einer vollexpandierten Schicht beträgt dementsprechend 100 %. Bei überexpandierten Schichten wird ein negativer Schäumungsgrad angegeben. Dabei wird ermittelt, zu welchem Anteil der Dickenzuwachs oder die Dichteabnahme, der beim Übergang vom unexpandierten in den vollexpandierten Zustand erfolgt, durch die anschließende Überexpansion wieder verloren geht bzw. hinzugewonnen wird.

Überraschenderweise weisen nach dem erfindungsgemäßen Verfahren hergestellte teilgeschäumte Selbstklebemasseschichten mit einem Schäumungsgrad von 20 bis weniger als 100%, vorzugsweise 25 bis 98%, bevorzugter 35 bis 95%, noch bevorzugter 50 bis 90% und insbesondere 65 bis 90%, wie zum Beispiel 70 bis 80%, vergleichbare oder sogar verbesserte Schockresistenzen auf als die entsprechenden vollexpandierten Schichten.

Die Teilschäumung ermöglicht zudem die Herstellung von Selbstklebemasseschichten mit äußerst geringe Dicken von insbesondere weniger als 20 $\mu$m, wie zum Beispiel 10 bis 15 $\mu$m. In derartigen teilgeschäumten Selbstklebemasseschichten beträgt der mittlere Durchmesser der von den Mikroballons gebildeten Hohlräume typischerweise weniger als 20 $\mu$m, bevorzugter höchstens 15 $\mu$m, wie zum Beispiel 10 $\mu$m. Die Verwendung derartiger dünner Selbstklebemasseschichten ist besonders für Verklebungen von solchen Bauteilen und elektronischen Geräten interessant, in denen zur Verklebung nur wenig Platz zur Verfügung steht, wie insbesondere in Mobilgeräten, wie zum Beispiel Handys.

Eine besonders geringe Oberflächenrauigkeit $R_a$ einer teilgeschäumten Selbstklebemasseschicht lässt sich bei Wahl eines geeigneten Schäumungsgrades insbesondere dann erzeugen, wenn die Selbstklebemasseschicht eine Monolage an Mikroballons aufweist, d.h. wenn innerhalb der Selbstklebemasseschicht nicht mehrere Mikroballons übereinander gelagert vorliegen. Vorzugsweise liegen in der Selbstklebemasseschicht die Mikroballons dabei in etwa in einer Ebene vor. Eine solche Monolage kann beispielsweise bereitgestellt werden, indem die Selbstklebemasseschicht einen Masseauftrag, gemessen in g/m$^2$, aufweist, der geringer ist als der mittlere Durchmesser der von den Mikroballons gebildeten Hohlräume in der teilgeschäumten Selbstklebemasseschicht, gemessen in $\mu$m. Im Rahmen der vorliegenden Anmeldung bezieht sich der Masseauftrag dabei auf das Trockengewicht der aufgetragenen Klebemischung. Vorzugsweise beträgt das Verhältnis des Masseauftrags der Klebemasseschicht (in g/m$^2$) zum mittleren Durchmesser der von den Mikroballons gebildeten Hohlräume (in $\mu$m) 0,6 - 0,9, besonders bevorzugt 0,7 - 0,8.

Die erfindungsgemäß eingesetzten Liner sind während der Schäumung gewichtsstabil, insbesondere verlieren sie während der Schäumung weniger als 2 %, beispielsweise weniger als 1 % Gewicht, beispielsweise in Form von Wasser. Dies wirkt sich vorteilhaft auf die Haftung der Liner auf der jeweiligen Oberfläche der schäumbaren Selbstklebemasseschicht, auf der sie während der Schäumung angeordnet sind, aus. Umfangreiche Gewichtsverluste haben insbesondere häufig zur Folge, dass sich der Liner von der Klebemasse abhebt.

Vorteilhaft hinsichtlich der Linerhaftung ist es außerdem, dass der Schrumpf der Liner während der Schäumung sowohl in Quer-, als auch in Längsrichtung weniger als 2%, bevorzugter weniger als 1%, und noch bevorzugter weniger als 0,5% beträgt und insbesondere weder in Quer-, noch in Längsrichtung ein Schrumpf der Liner während der Schäumung festzustellen ist.

Vorteilhaft hinsichtlich der Linerhaftung ist es ferner, wenn die Liner während der Schäumung durchgehend eine Planlage einnehmen. Damit ist gemeint, dass die Liner während der gesamten Schäumung in einer Ebene liegen. Bei vielen Linern besteht das Problem, dass sie mangels Temperaturbeständigkeit bei üblichen Schäumungstemperaturen ihre Planlage verlieren und insbesondere eine Wellenform einnehmen, und gegebenenfalls gleichzeitig schrumpfen. Dies hat häufig zur Folge, dass sich die Klebemasseschicht jedenfalls teilweise vom gewellten Liner ablöst. Alternativ oder zusätzlich besteht im Fall eines gewellten Liners auch die Gefahr, dass sich die Klebemasseschicht jedenfalls teilweise von jenem Liner ablöst, der sich auf der dem gewellten Liner gegenüberliegenden Seite der Klebemasseschicht befindet.

Sollten die verwendeten Liner unter Schäumungsbedingungen nicht vollständige Dimensionsstabilität aufweisen, so sollten aber beide Liner ein gleiches Verhalten haben, zum Beispiel gleiches Schrumpfverhalten, weil sich sonst ein Liner abhebt.

Die zur Schäumung notwendige Energie wird typischerweise durch Konvektion, Strahlung wie IR- oder UV-Strahlung, oder durch Wärmeleitung auf den Verbund aus schäumbarer Selbstklebemasseschicht, Liner und gegebenenfalls Träger bzw. weiterer Selbstklebemasseschicht übertragen. Besonders bevorzugt wird die notwendige Energie durch Wärmeleitung gleichmäßig über die Bahnbreite auf den Verbund übertragen, insbesondere durch eine oder mehrere geheizte Walzen. Dabei wird insbesondere eine Abfolge aus mindestens zwei geheizten Walzen eingesetzt, wobei der Verbund so über die mindestens zwei Walzen geführt wird, dass die Oberflächen des Verbunds wechselseitig die Walzenoderflächen berühren.

Das erfindungsgemäße Verfahren bringt typischerweise zumindest teilgeschäumte Selbstklebemasseschichten hervor mit einer Dicke von 10 bis 2000 $\mu$m.

Insbesondere wenn das erfindungsgemäße Verfahren ein geschäumtes Transfertape ergibt, d.h. ein trägerloses Haftklebeband umfassend mindestens eine mit Mikroballons zumindest teilgeschäumte Selbstklebemasseschicht, weist die geschäumte Selbstklebemasseschicht vorzugsweise eine Dicke von 30 bis 300 $\mu$m, wie zum Beispiel 150 $\mu$m, auf. Der Verbund aus einer schäumbaren Selbstklebemasseschicht zwischen zwei Linern stellt ein bevorzugtes Transfertape dar. Die erfindungsgemäße Schäumung der Selbstklebemasseschicht zwischen den Linern ergibt dann ein geschäumtes Transfertape. Dementsprechend betrifft die vorliegende Erfindung auch ein Verfahren zur Herstellung eines Transfertapes in Form einer mit Mikroballons zumindest teilgeschäumten Selbstklebemasseschicht, bei dem eine schäumbare Selbstklebemasseschicht enthaltend expandierbare Mikroballons, die zwischen zwei Linern angeordnet ist, bei einer zur Schäumung geeigneten Temperatur für einen solchen Zeitraum wärmebehandelt wird, dass nach dem anschließenden Abkühlen der Schicht der gewünschte Schäumungsgrad erreicht wird, dadurch gekennzeichnet, dass die beiden Liner während der Schäumung im Wesentlichen vollständig auf der jeweiligen Oberfläche der schäumbaren Selbstklebemasseschicht, auf der sie angeordnet sind, haften bleiben. In einer alternativen Ausführungsform des Verfahrens zur Herstellung eines geschäumten Transfertapes ist vor der Schäumung zwischen den Linern neben einer schäumbaren Selbstklebemasseschicht enthaltend expandierbare Mikroballons eine weitere Selbstklebemasseschicht angeordnet, die nicht schäumbar oder schäumbar sein kann, wobei sie vorzugsweise expandierbare Mikroballons enthält.

Der Verbund aus einer schäumbaren Selbstklebemasseschicht zwischen einem Liner und einem Träger als außenliegende Schichten stellt ein einseitiges Klebeband dar. Die erfindungsgemäße Schäumung der Selbstklebemasseschicht führt dann zu einem geschäumten einseitigen Klebeband. Dementsprechend betrifft die vorliegende Erfindung auch ein Verfahren zur Herstellung eines einseitigen Klebebands enthaltend eine mit Mikroballons zumindest teilgeschäumte Selbstklebemasseschicht, bei dem eine schäumbare Selbstklebemasseschicht enthaltend expandierbare Mikroballons, die zwischen einem Liner und einem Träger angeordnet ist, bei einer zur Schäumung geeigneten Temperatur für einen solchen Zeitraum wärmebehandelt wird, dass nach dem anschließenden Abkühlen der Schicht der gewünschte Schäumungsgrad erreicht wird, dadurch gekennzeichnet, dass der Liner während der Schäumung im Wesentlichen vollständig auf der Oberfläche der schäumbaren Selbstklebemasseschicht, auf der er angeordnet ist, haften bleibt. In einer alternativen Ausführungsform des Verfahrens zur Herstellung eines einseitigen Klebebands ist vor der Schäumung zwischen dem Liner und dem Träger neben einer schäumbaren Selbstklebemasseschicht enthaltend expandierbare Mikroballons angrenzend an den Träger eine weitere Selbstklebemasseschicht angeordnet, die nicht schäumbar oder schäumbar sein kann, wobei sie vorzugsweise expandierbare Mikroballons enthält.

Alternativ kann auch auf beiden Seiten eines Trägers jeweils eine schäumbare Selbstklebemasseschicht angeordnet sein, wobei auf der dem Träger gegenüber liegenden Seite der Selbstklebemasseschichten wiederum jeweils ein Liner angeordnet ist. Wie bereits ein Transfertape, stellte auch dieser Verbund ein doppelseitiges Klebeband dar, allerdings ein doppelseitiges trägerhaltiges Klebeband. Die erfindungsgemäße Schäumung der Selbstklebemasseschichten führt dann zu einem geschäumten doppelseitigen trägerhaltigen Klebeband. Dementsprechend betrifft die vorliegende Erfindung auch ein Verfahren zur Herstellung eines doppelseitigen trägerhaltigen Klebebands enthaltend mit Mikroballons zumindest teilgeschäumte Selbstklebemasseschichten, bei dem zwei schäumbare Selbstklebemasseschichten enthaltend expandierbare Mikroballons, die auf den gegenüber liegenden Seiten eines Träger angeordnet sind, wobei auf der dem Träger gegenüber liegenden Seite der Selbstklebemasseschichten jeweils ein Liner angeordnet ist, bei einer zur Schäumung geeigneten Temperatur für einen solchen Zeitraum wärmebehandelt werden, dass nach dem anschließenden Abkühlen der Schichten der gewünschte Schäumungsgrad erreicht wird, dadurch gekennzeichnet, dass die Liner während der Schäumung im Wesentlichen vollständig auf der jeweiligen Oberfläche der schäumbaren Selbstklebemasseschichten, auf der sie angeordnet sind, haften bleiben. In einer alternativen Ausführungsform des Verfahrens zur Herstellung eines doppelseitigen Klebebands ist vor der Schäumung zwischen dem Liner und dem Träger neben einer schäumbaren Selbstklebemasseschicht enthaltend expandierbare Mikroballons angrenzend an den Träger eine weitere Selbstklebemasseschicht angeordnet, die nicht schäumbar oder schäumbar sein kann, wobei sie vorzugsweise expandierbare Mikroballons enthält.

Im doppelseitigen trägerhaltigen Klebeband ist die chemische Zusammensetzung der beiden schäumbaren Selbstklebemasseschichten vorzugsweise identisch. Insbesondere ist das Klebeband vollkommen symmetrisch aufgebaut, das heißt sowohl bezüglich der chemischen Zusammensetzung der beiden schäumbaren Selbstklebemasseschichten, als auch bezüglich seines strukturellen Aufbaus, indem beide Oberflächen des Trägers T identisch vorbehandelt sind und die beiden schäumbaren Selbstklebemasseschichten dieselbe Dicke aufweisen. Erfindungsgemäß ist aber auch ein doppelseitiges trägerhaltiges Klebeband, bei dem die beiden schäumbaren Selbstklebemasseschichten eine unterschiedliche chemische Zusammensetzung aufweisen und/oder unterschiedlich dick sind. Die vorstehenden Ausführungen gelten analog für das geschäumte doppelseitige trägerhaltige Klebeband, das durch das erfindungsgemäße Verfahren erhältlich ist.

Dementsprechend kann es sich bei dem erfindungsgemäßen Klebeband, das mindestens eine mit Mikroballons zumindest teilgeschäumte Selbstklebemasseschicht umfasst, die nach einem erfindungsgemäßen Verfahren erhältlich ist, um ein Transfertape, ein einseitiges Klebeband oder ein doppelseitiges Klebeband handeln. Vorzugsweise beträgt der Anteil der Mikroballons in der schäumbaren Selbstklebemasseschicht bis zu 12 Gew.-%, bevorzugt 0,25 Gew.-% bis 5 Gew.-%, bevorzugter 0,5 bis 4 Gew.-%, noch bevorzugter 0,8 bis 3 Gew.-%, insbesondere 1 bis 2,5 Gew.-%, wie zum Beispiel 1 bis 2 Gew.-%, jeweils bezogen auf die Gesamtzusammensetzung der schäumbaren Selbstklebemasseschicht. In diesen Bereichen lassen sich nach dem erfindungsgemäßen Verfahren zumindest teilgeschäumte Selbstklebemasseschichten bzw. Haftklebestreifen enthaltend solche zumindest teilgeschäumten Selbstklebemasseschichten herstellen, die besonders gute Schockresistenzen aufweisen. Aus den angegebenen Mikroballonanteilen ergeben sich typischerweise zumindest teilgeschäumte Selbstklebemasseschichten mit einer absoluten Dichte von 400 bis 990 $kg/m^3$, vorzugsweise 500 bis 900 $kg/m^3$, bevorzugter 600 bis 850 $kg/m^3$ und insbesondere 650 bis 800 $kg/m^3$, wie zum Beispiel 700 bis 800 $kg/m^3$. Das erfindungsgemäße Verfahren erlaubt auch den Einsatz von hohen Mikroballonanteilen. Insbesondere bevorzugt sind also auch Mikroballonanteile von mehr als 0,5 Gew.-%, insbesondere, mehr als 1 Gew.-%, wie zum Beispiel mehr als 2 Gew.-%.

Selbstklebemassen bzw. Haftklebemassen sind insbesondere solche polymeren Massen, die - gegebenenfalls durch geeignete Additivierung mit weiteren Komponenten wie beispielsweise Klebharzen - bei der Anwendungstemperatur (sofern nicht anders definiert, bei Raumtemperatur, d.h. 20 °C) dauerhaft klebrig und klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebendes Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück. So können beispielsweise schwach oder stark anhaftende Klebemassen hergestellt werden; weiterhin solche, die nur einmalig und permanent verklebbar sind, so dass die Verklebung ohne Zerstörung des Klebemittels und/oder der Substrate nicht gelöst werden können, oder solche die leicht wiederablösbar und gegebenenfalls mehrfach verklebbar sind.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765:1994-03) unterhalb der Anwendungstemperatur (also üblicherweise unterhalb der Raumtemperatur, d.h. 20 °C) aufweist.

Gegebenenfalls kann es vorteilhaft sein, durch geeignete kohäsionssteigernde Maßnahmen, wie beispielsweise Vernetzungsreaktionen (Ausbildung brückenbildender Verknüpfungen zwischen den Makromolekülen), den Temperaturbereich, in dem eine Polymermasse haftklebrige Eigenschaften aufweist, zu vergrößern und/oder zu verschieben. Der Anwendungsbereich der Haftklebemassen kann somit durch eine Einstellung zwischen Fließfähigkeit und Kohäsion der Masse optimiert werden.

Eine Haftklebemasse wirkt bei Raumtemperatur (20 °C) permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

In einer bevorzugten Ausführungsform lässt sich der nach dem erfindungsgemäßen Verfahren erhältliche Haftklebestreifen durch dehnendes Verstrecken im Wesentlichen in der Verklebungsebene rückstands- und zerstörungsfrei wieder ablösen. Unter "rückstandsfreiem Ablösen" des Haftklebestreifens ist erfindungsgemäß gemeint, dass er beim Ablösen auf den verklebten Oberflächen der Komponenten keine Klebstoffrückstände hinterlässt. Ferner ist unter "zerstörungsfreiem Ablösen" des Haftklebestreifens erfindungsgemäß gemeint, dass er beim Ablösen die verklebten Oberflächen der Komponenten nicht beschädigt wie beispielsweise zerstört.

Damit sich Haftklebestreifen durch dehnendes Verstrecken in der Verklebungsebene rückstands- und zerstörungsfrei wieder ablösen lassen, müssen sie bestimmte klebtechnische Eigenschaften besitzen. So muss beim Verstrecken die Klebrigkeit der Haftklebestreifen deutlich sinken. Je niedriger die Klebleistung im verstreckten Zustand ist, umso weniger stark wird der Untergrund beim Ablösen beschädigt oder umso weniger ausgeprägt besteht die Gefahr, dass Rückstände auf dem Verklebungssubstrat zurückbleiben. Besonders deutlich ist diese Eigenschaft bei Haftklebemassen auf Basis von Vinylaromatenblockcopolymeren zu erkennen, bei denen in der Nähe der Streckgrenze die Klebrigkeit auf unter 10 % sinkt.

Damit Haftklebestreifen durch dehnendes Verstrecken leicht und rückstandsfrei wieder abgelöst werden können, müssen sie neben den oben beschriebenen klebtechnischen auch bestimmte mechanische Eigenschaften besitzen. Besonders vorteilhaft ist das Verhältnis der Reißkraft (Reißfestigkeit) und der Strippkraft größer als zwei, bevorzugt größer als drei. Dabei ist die Strippkraft diejenige Kraft, die aufgewendet werden muss, um einen Haftklebstreifen aus einer Klebfuge durch dehnendes Verstrecken in der Verklebungsebene wiederabzulösen. Diese Strippkraft setzt sich aus der Kraft, die wie oben beschrieben für das Ablösen des Haftklebstreifens von den Verklebungsuntergründen nötig ist, und der Kraft, die zur Verformung des Haftklebstreifens aufgewendet werden muss, zusammen. Die zur Verformung des Haftklebstreifens erforderliche Kraft ist abhängig von der Dicke des Haftklebstreifens. Die zum Ablösen benötigte Kraft ist dagegen in dem betrachteten Dickenbereich des Haftklebstreifens unabhängig von der Dicke des Haftklebstreifens.

Wird im erfindungsgemäßen Verfahren ein Träger eingesetzt, so kommen grundsätzlich alle bekannten (permanenten) Träger in Frage, wie zum Beispiel Gelege, Gewebe, Gewirke, Vliese, Papiere, Tissues, und Folienträger. Typischerweise werden Folienträger eingesetzt, wobei diese geschäumt sein können (wie zum Beispiel thermoplastische Schäume) oder ungeschäumt sein können. Zur Herstellung des Folienträgers werden typischerweise filmbildende oder extrusionsfähige Polymere eingesetzt, die zusätzlich mono- oder biaxial orientiert sein können. Eine typische Trägerdicke liegt im Bereich von 5 bis 150 μm.

Die Folienträger können einschichtig oder mehrschichtig sein, vorzugsweise sind sie einschichtig. Des Weiteren können die Folienträger Deckschichten aufweisen, beispielsweise Sperrschichten, die ein Eindringen von Komponenten aus der Klebemasse in die Folie oder umgekehrt unterbinden. Diese Deckschichten können auch Barriereeigenschaften haben, um so ein Durchdiffundieren von Wasserdampf und/oder Sauerstoff zu verhindern. Die Rückseite der Folienträger kann einer antiadhäsiven physikalischen Behandlung oder Beschichtung unterzogen sein.

Zur Herstellung eines Folienträgers kann es angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Ein Folienträger kann nichtdehnbar sein, wobei er vorzugsweise eine Dicke von 5 bis 125 μm, bevorzugter von 5 bis 40 μm und insbesondere von weniger als 10 μm aufweist. Alternativ kann ein Folienträger dehnbar sein, vorzugsweise viskoelastisch, wobei der dehnbare Folienträger vorzugsweise eine Dicke von 50 bis 150 μm, bevorzugter von 60 bis 100 μm und insbesondere von 70 μm bis 75 μm aufweist.

Unter einem "nichtdehnbaren Folienträger" ist erfindungsgemäß insbesondere ein Folienträger gemeint, der, bevorzugt sowohl in der Längsrichtung als auch in der Querrichtung, eine Reißdehnung von weniger als 300% aufweist. Der nichtdehnbare Folienträger weist außerdem, bevorzugt unabhängig voneinander sowohl in der Längsrichtung als auch in der Querrichtung, vorzugsweise eine Reißdehnung von weniger als 200 %, bevorzugter von weniger als 150 %, noch bevorzugter von weniger als 100 %, und insbesondere von weniger als 50%, auf. Die angegebenen Werte beziehen sich jeweils auf die weiter hinten angegebene Messmethode R1.

Unter einem "dehnbaren Folienträger" ist erfindungsgemäß insbesondere ein Folienträger gemeint, der, bevorzugt sowohl in der Längsrichtung als auch in der Querrichtung, eine Reißdehnung von mindestens 300% aufweist. Der dehnbare Folienträger weist außerdem, bevorzugt unabhängig voneinander sowohl in der Längsrichtung als auch in der Querrichtung, eine Reißdehnung von mindestens 500% auf, wie zum Beispiel von mindestens 800%. Die angegebenen Werte beziehen sich jeweils auf die weiter hinten angegebene Messmethode R1.

Durch den Einsatz eines nichtdehnbaren Folienträgers im erfindungsgemäßen Verfahren wird die Verarbeitbarkeit des resultierenden Klebebands erleichtert, insbesondere lassen sich die Stanzprozesse erleichtern. Der nichtdehnbare Folienträger führt in Stanzlingen zu ausgeprägter Steifheit, so dass der Stanzprozess und das Platzieren der Stanzlinge vereinfacht werden.

Als Materialien für die Folie des nichtdehnbaren Folienträgers werden bevorzugt Polyester, insbesondere Polyethylenterephthalat (PET), Polyamid (PA), Polyimid (PI) oder mono- oder biaxial verstrecktes Polypropylen (PP) verwendet. Besonders bevorzugt besteht der nichtdehnbare Folienträger aus Polyethylenterephthalat. Ebenfalls möglich ist auch die Verwendung von mehrschichtigen Laminaten oder Coextrudaten, insbesondere aus den vorgenannten Materialien. Vorzugsweise ist der nichtdehnbare Folienträger einschichtig.

In vorteilhafter Vorgehensweise sind eine oder beide Oberflächen der nichtdehnbaren Folienträgers physikalisch und/oder chemisch vorbehandelt. Eine solche Vorbehandlung kann beispielsweise durch Ätzung und/oder Coronabehandlung und/oder Plasmavorbehandlung und/oder Primerung erfolgen, vorzugsweise durch Ätzung. Sofern beide Oberflächen des Trägers vorbehandelt sind, kann die Vorbehandlung jeder Oberfläche unterschiedlich erfolgen oder insbesondere können beide Oberflächen gleich vorbehandelt sein.

Um sehr gute Ergebnisse für die Aufrauhung zu erzielen, ist es zu empfehlen, als Reagenz zum Ätzen der Folie Trichloressigsäure (Cl3C-COOH) oder Trichloressigsäure in Kombination mit inerten pulverförmigen Verbindungen, bevorzugt Siliziumverbindungen, besonders bevorzugt [SiO2]x, einzusetzen. Sinn der inerten Verbindungen ist, in die Oberfläche der Folie, insbesondere der PET-Folie, eingebaut zu werden, um auf diese Weise die Rauigkeit und die Oberflächenenergie zu verstärken.

Die Coronabehandlung ist ein chemisch-thermisches Verfahren zur Steigerung der Oberflächenspannung/Oberflächenenergie von polymeren Substraten. Zwischen zwei Elektroden werden in einer Hochspannungsentladung Elektronen stark beschleunigt, was zu einer Ionisierung der Luft führt. Wird ein Kunststoffsubstrat in die Bahn dieser beschleunigten Elektroden eingebracht, so schlagen die so erzeugten beschleunigten Elektroden mit 2 - 3-facher Energie auf die Substratoberfläche auf, wie sie notwendig wäre, um die molekularen Bindungen der meisten Substrate oberflächlich aufzubre¬chen. Dies führt zur Entstehung von gasförmigen Reaktionsprodukten und hoch reak¬tiven, freien Radikalen. Diese freien Radikale können in der Gegenwart von Sauerstoff und den Reaktionsprodukten rasch reagieren und bilden verschiedene chemische Funktionsgruppen auf der Substratoberfläche. Funktionsgruppen, die sich aus diesen Oxidationsreaktionen ergeben, tragen am stärksten dazu bei, die Oberflächenenergie zu steigern. Die Coronabehandlung kann mit Zweielektroden-, aber auch mit Einelek¬troden-Anlagen erfolgen. Während der Coronavorbehandlung können (neben üblicher Luft) unterschiedliche Prozessgase wie Stickstoff zum Einsatz kommen, die eine Schutzgasatmosphäre ausbilden beziehungsweise die Coronavorbehandlung unterstützen.

Die Plasma-Behandlung - insbesondere Niederdruck-Plasmabehandlung - ist ein bekanntes Verfahren zur Oberflächenvorbehandlung von Klebemassen. Das Plasma führt zu einer Aktivierung der Oberfläche im Sinne einer höheren Reaktivität. Dabei kommt es zu chemischen Veränderungen der Oberfläche, wodurch zum Beispiel das Verhalten der Klebemasse gegenüber polaren und unpolaren Oberflächen beeinflusst werden kann. Bei dieser Vorbehandlung handelt es sich im Wesentlichen um Oberflächenphänomene.

Als Primer werden allgemein Beschichtungen oder Grundierungen bezeichnet, die insbesondere haftvermittelnde und/oder passivierende und/oder korrosionshemmende Wirkung besitzen. Im Rahmen der vorliegenden Erfindung kommt es insbesondere auf die haftvermittelnde Wirkung an. Haftvermittelnde Primer, oft auch Haftvermittler oder Adhesion Promoter genannt, sind vielfach in Form von kommerziellen Produkten oder aus der technischen Literatur bekannt.

Ein geeigneter nichtdehnbarer Folienträger ist unter der Handelsbezeichnung Hostaphan ® RNK erhältlich. Diese Folie ist hochtransparent, biaxial orientiert und besteht aus drei coextrudierten Schichten.

Die Zugfestigkeit eines nichtdehnbaren Folienträgers liegt erfindungsgemäß bevorzugt bei größer 100 N/mm$^2$, bevorzugter bei größer 150 N/mm$^2$, noch bevorzugter bei größer 180 N/mm$^2$ und insbesondere bei größer 200 N/mm$^2$ in Längsrichtung und bevorzugt bei größer 100 N/mm$^2$, bevorzugter bei größer 150 N/mm$^2$, noch bevorzugter bei größer 180 N/mm$^2$, und insbesondere bei größer 200 N/mm$^2$ in Querrichtung (angegebene Werte jeweils in Bezug auf die weiter hinten angegebene Messmethode R1). Der Folienträger bestimmt maßgeblich die Zugfestigkeit des sich ergebenden Klebebands. Außerdem liegt der Elastizitätsmodul des nichtdehnbaren Folienträgers vorzugsweise bei mehr als 0,5 GPa, bevorzugter bei mehr als 1 GPa und insbesondere bei mehr als 2,5 GPa, bevorzugt sowohl in der Längsrichtung, als auch in der Querrichtung.

Die Verwendung eines dehnbaren Folienträgers erlaubt andere vorteilhafte Produktausgestaltungen. Wird im erfindungsgemäßen Verfahren ein dehnbarer Folienträger eingesetzt, so reicht die Dehnbarkeit des Folienträgers typischerweise aus, um ein Ablösen des Haftklebstreifens durch dehnendes Verstrecken im Wesentlichen in der Verklebungsebene zu gewährleisten. Vorzugsweise weist der dehnbare Folienträger ein Rückstellvermögen von über 50 % auf, bevorzugt sowohl in der Längsrichtung, als auch in der Querrichtung. Bevorzugt wird die Zugfestigkeit des dehnbaren Trägermaterials so eingestellt, dass sich der Haftklebestreifen durch dehnende Verstreckung aus einem Klebeverbund rückstands- und zerstörungsfrei wieder ablösen lässt.

In einer bevorzugten Ausführungsform eines dehnbaren Folienträgers werden Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern wie zum Beispiel die Erweichungstemperatur und/oder die Reißfestigkeit. Besonders bevorzugt ist Polyethylen, insbesondere Polyethylenschaum.

Ferner lassen sich Polyurethane vorteilhaft als Ausgangsmaterialien für dehnbare Folienträger verwenden. Polyurethane sind chemisch und/oder physikalisch vernetzte Polykondensate, die typischerweise aus Polyolen und Isocyanaten aufgebaut werden. Je nach Art und Einsatzverhältnis der einzelnen Komponenten sind dehnbare Materialien erhältlich, die im Sinne dieser Erfindung vorteilhaft eingesetzt werden können. Besonders bevorzugt ist Polyurethanschaum.

Weiterhin ist es vorteilhaft, auf Kautschuk basierende Materialien in dehnbaren Folienträgern einzusetzen, um Dehnbarkeit zu realisieren. Als Kautschuk oder Synthesekautschuk oder daraus erzeugten Verschnitten als Ausgangsmaterial für dehnbare Folienträger kann der Naturkautschuk grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten StyrolButadien-Kautschuke (SBR), der Styrolblockcopolymere (SBC), der Butadien-Kautschuke (BR), der synthetischen Polyisoprene (IR), der Butyl-Kautschuke (IIR), der halogenierten Butyl-Kautschuke (XIIR), der Ethylenvinylacetat-Copolymere (EVA) und der Polyurethane und/oder deren Verschnitten gewählt werden.

Besonders vorteilhaft einsetzbar als Materialien für dehnbare Folienträger sind Blockcopolymere. Dabei sind einzelne Polymerblöcke kovalent miteinander verknüpft. Die Blockverknüpfung kann in einer linearen Form vorliegen, aber auch in einer sternförmigen oder Pfropfcopolymervariante. Ein Beispiel für ein vorteilhaft einsetzbares Blockcopolymer ist ein lineares Triblockcopolymer, dessen zwei endständige Blöcke eine Erweichungstemperatur von mindestens 40 °C, bevorzugt mindestens 70 °C aufweisen und dessen Mittelblock einer Erweichungstemperatur von höchstens 0 °C, bevorzugt höchstens -30 °C aufweist. Höhere Blockcopolymere, etwa Tetrablockcopolymere sind ebenfalls einsetzbar. Wichtig ist, dass zumindest zwei Polymerblöcke gleicher oder verschiedener Art im Blockcopolymer enthalten sind, die eine Erweichungstemperatur jeweils von mindestens 40 °C, bevorzugt mindestens 70 °C aufweisen und die über zumindest einen Polymerblock mit einer Erweichungstemperatur von höchstens 0 °C, bevorzugt höchstens -30 °C in der Polymerkette voneinander separiert sind. Beispiele für Polymerblöcke sind Polyether wie zum Beispiel Polyethylenglykol, Polypropylenglykol oder Polytetrahydrofuran, Polydiene, wie zum Beispiel Polybutadien oder Polyisopren, hydrierte Polydiene, wie zum Beispiel Polyethylenbutylen oder Polyethylenpropylen, Polyester, wie zum Beispiel Polyethylenterephthalat, Polybutandioladipat oder Polyhexandioladipat, Polycarbonat, Polycaprolacton, Polymerblöcke vinylaromatischer Monomere, wie zum Beispiel Polystyrol oder Poly-[a]-Methylstyrol, Polyalkylvinylether und Polyvinylacetat. Polymerblöcke können aus Copolymeren aufgebaut sein.

Der dehnbare Folienträger ist bevorzugt auf Basis von Polyvinylaromaten-Polydien-Blockcopolymer, insbesondere von Polyvinylaromaten-Polybutadien-Blockcopolymer, sowie typischerweise von Klebharz. Ein solcher Folienträger überzeugt vor allem durch eine geringe Strippkraft, die eine leichte Wiederablösbarkeit des Haftklebestreifens ermöglicht, sowie eine geringe Reißeranfälligkeit beim Wiederablösen des Haftklebestreifens.

Des Weiteren sind als dehnbare Folienträger bahnförmige, nicht syntaktische Schaumstoffe (beispielsweise aus Polyethylen oder Polyurethan) denkbar.

Des Weiteren sind als dehnbare Folienträger Polyacrylatkerne denkbar. Erfindungsgemäß sind diese nicht geschäumt.

Zur besseren Verankerung der Selbstklebemassen auf den dehnbaren Folienträgern können die Folienträger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden.

Liner für Selbstklebebänder basieren häufig auf biaxial oder monoaxial gerecktem Polypropylen, auf Polyethylen oder anderen Polyolefinen, auf Papier oder auf Polyester. Solche Liner sind häufig auch mehrschichtig aufgebaut oder beschichtet. Häufig sind solche Liner einseitig oder beidseitig silikonisiert. Die im erfindungsgemäßen Verfahren eingesetzten Liner sind Polyester-Liner wie insbesondere PET-Liner, die zumindest einseitig, typischerweise beidseitig antiadhäsiv beschichtet sind, wie zum Beispiel silikonisiert, sind. Die Polyester-Liner haben eine Dicke von 50 bis 75 $\mu$m. Die beschriebenen Polyester-Liner haften während der Schäumung besonders gut auf der schäumbaren Selbstklebemasseschicht, auf der sie angeordnet sind. Die Eignung wird insbesondere von der Beschaffenheit des Linermaterials sowie von der Dicke des Liner beeinflusst.

Im erfindungsgemäßen Verfahren werden vorzugsweise folgende schäumbare Selbstklebemasseschichten enthaltend expandierbare Mikroballons, im Folgenden auch Selbstklebemassen bzw. Selbstklebemasseschichten genannt, eingesetzt. Die Selbstklebemasseschichten können auf Polymeren bzw. Polymermassen wie in Anspruch 1 definiert basieren. Auf Basis eines Polymers bzw. einer bestimmten Polymermasse in diesem Sinne bedeutet typischerweise, dass zu mindestens 50 Gew.-% bezogen auf den Gesamtanteil aller Elastomerkomponenten das besagte Polymer die Funktion der Elastomerkomponente übernimmt. Vorzugsweise ist das besagte Polymer alleinig als Elastomerkomponente vorgesehen. Das Basispolymer kann dabei auch eine Polymermischung sein. Das Basispolymer stellt außerdem vorzugsweise mindestens 50 Gew.-% der in der Klebemasse enthaltenen Polymere dar, es kann beispielweise auch das einzige Polymer der Klebemasse darstellen. Eventuell in der Klebemasse enthaltene Klebharze gelten in diesem Zusammenhang nicht als Polymere.

Die Selbstklebemasseschichten basieren (i) auf Acrylatmassen Typischerweise sind diese transparent, gut beständig gegen Alterung, Temperatur, UV-Strahlung, Ozon, Feuchtigkeit, Lösemittel bzw. Weichmacher und weisen eine sehr gute Klebkraft auf polaren Substraten auf. In der vorliegenden Anmeldung werden die Begriffe "Acrylat" und "Polyacrylat" synonym verwendet. Darunter ist jeweils ein Polymer zu verstehen, das aus einer Polymerisation von (Meth)Acrylsäure, einem Ester davon oder Mischungen der vorgenannten Monomere, und gegebenenfalls weiteren copolymerisierbaren Monomeren, hervorgegangen ist. Der Begriff (Meth)Acrylsäure umfasst außerdem sowohl Acrylsäure, als auch Methacrylsäure. Typischerweise handelt es sich bei den Polyacrylaten um Copolymere.

Erfindungsgemäß sind auch Selbstklebemasseschichten auf Basis (ii) eines Blends vor Acrylat und, insbesondere chemisch oder physikalisch vernetztem, Synthesekautschuk wie zum Beispiel Vinylaromatenblockcopolymer, wobei bezogen auf die Gesamtheit von 100 Gew.-% an Acrylatkomponente und Synthesekautschukkomponente die Acrylatkomponente in einem Anteil von 60 Gew.-% bis 90 Gew.-% und die Synthesekautschukkomponente in einem Anteil von 10 Gew.-% bis 40 Gew.-% vorliegt. Typischerweise weisen Synthesekautschuke eine hohe Klebrigkeit auf (durch die Klebharze), bestechen durch eine sehr gute Klebkraft auf polaren und auf unpolaren Substraten wie Polypropylen und Polyethylen und sind geeignet für ein breites Anwendungsspektrum.

Wenn die Selbstklebemasseschicht auf einem Blend von Acrylat und Vinylaromatenblockcopolymer basiert, dann wird als Vinylaromatenblockcopolymer vorzugsweise mindestens ein Synthesekautschuk in Form eines Blockcopolymers mit einem Aufbau A-B, A-B-A, $(A-B)_n$, $(A-B)_nX$ oder $(A-B-A)_nX$ eingesetzt, worin

- die Blöcke A unabhängig voneinander für ein Polymer, gebildet durch Polymerisation mindestens eines Vinylaromaten,
- die Blöcke B unabhängig voneinander für ein Polymer, gebildet durch Polymerisation von konjugierten Dienen mit 4 bis 18 C-Atomen, oder für ein teilhydriertes Derivat eines solchen Polymers,
- X für den Rest eines Kopplungsreagenzes oder Initiators und
- n für eine ganze Zahl $\geq$ 2 stehen.

Besonders bevorzugt sind alle Synthesekautschuke der erfindungsgemäßen Selbstklebemasseschicht Blockcopolymere mit einem Aufbau A-B, A-B-A, $(A-B)_n$, $(AB)_nX$ oder $(A-B-A)_nX$ wie vorstehend dargelegt. Die erfindungsgemäße Selbstklebemasseschicht kann somit auch Gemische verschiedener Blockcopolymere mit einem Aufbau wie vorstehend beschrieben enthalten.

Geeignete Blockcopolymere (Vinylaromatenblockcopolymere) umfassen also einen oder mehrere gummiartige Blöcke B (Weichblöcke) und einen oder mehrere glasartige Blöcke A (Hartblöcke). Besonders bevorzugt ist mindestens ein Synthesekautschuk der erfindungsgemäßen Selbstklebemasseschicht ein Blockcopolymer mit einem Aufbau A-B, A-B-A, $(A-B)_2X$, $(A-B)_3X$ oder $(A-B)_4X$, wobei für A, B und X die vorstehenden Bedeutungen gelten. Ganz besonders bevorzugt sind alle Synthesekautschuke der erfindungsgemäßen Selbstklebemasseschicht Blockcopolymere mit einem Aufbau A-B, A-B-A, $(A-B)_2X$, $(A-B)_3X$ oder $(A-B)_4X$, wobei für A, B und X die vorstehenden Bedeutungen gelten. Insbesondere ist der Synthesekautschuk der erfindungsgemäßen Selbstklebemassenschicht ein Gemisch aus Blockcopolymeren mit einem Aufbau AB, A-B-A, $(A-B)_2X$, $(A-B)_3X$ oder $(A-B)_4X$, das bevorzugt mindestens Diblockcopolymere A-B und/oder Triblockcopolymere A-B-A und/oder $(A-B)_2X$ enthält.

Weiterhin vorteilhaft ist ein Gemisch aus Diblock- und Triblockcopolymeren und $(A-B)_n$oder $(A-B)_nX$-Blockcopolymeren mit n größer gleich 3.

Weiterhin vorteilhaft ist ein Gemisch aus Diblock- und Multiblockcopolymeren und $(AB)_n$- oder $(A-B)_nX$-Blockcopolymeren mit n größer gleich 3.

Als Vinylaromatenblockcopolymere können somit beispielsweise Diblockcopolymere A-B in Kombination mit anderen der genannten Blockcopolymere genutzt werden. Über den Anteil an Diblockcopolymeren können das Auffließverhalten der Selbstklebemassen und deren Verklebungsfestigkeit eingestellt werden. Erfindungsgemäß eingesetztes Vinylaromatenblockcopolymer weist vorzugsweise einen Diblockcopolymeranteil von 0 Gew.-% bis 70 Gew.-% und bevorzugter von 15 Gew.-% bis 50 Gew.-% auf. Ein höherer Anteil an Diblockcopolymer im Vinylaromatenblockcopolymer führt zu einer deutlichen Reduktion an Kohäsion der Klebemasse.

In Selbstklebemassen finden bevorzugt Blockcopolymere enthaltend Polymerblöcke (i) überwiegend gebildet von Vinylaromaten (A-Blöcke), bevorzugt Styrol, und gleichzeitig (ii) solche überwiegend gebildet durch Polymerisation von 1,3-Dienen (B-Blöcke), wie zum Beispiel Butadien und Isopren oder einem Copolymer aus beidem, Anwendung.

Besonders bevorzugt enthalten erfindungsgemäße Selbstklebemassen Styrolblockcopolymere, beispielsweise besitzen die Blockcopolymere der Selbstklebemassen Polystyrolendblöcke.

Die aus den A- und B-Blöcken resultierenden Blockcopolymere können gleiche oder unterschiedliche B-Blöcke enthalten. Die Blockcopolymere können lineare A-B-A-Strukturen aufweisen. Einsetzbar sind ebenfalls Blockcopolymere von radialer Gestalt sowie sternförmige und lineare Multiblockcopolymere. Als weitere Komponenten können A-B-Zweiblockcopolymere vorhanden sein. Sämtliche der vorgenannten Polymere können allein oder im Gemisch miteinander genutzt werden.

In einem erfindungsgemäß eingesetzten Vinylaromatenblockcopolymer, wie insbesondere einem Styrolblockcopolymer, beträgt der Anteil an Polyvinylaromaten, wie insbesondere Polystyrol, vorzugsweise mindestens 12 Gew.-%, bevorzugter mindestens 18 Gew.-% und besonders bevorzugt mindestens 25 Gew.-% und ebenso vorzugsweise höchstens 45 Gew.-% und bevorzugter höchstens 35 Gew. -%.

Anstelle der bevorzugten Polystyrolblöcke können als Vinylaromaten auch Polymerblöcke auf Basis anderer aromatenhaltiger Homo- und Copolymere (bevorzugt Cs- bis $C_{12}$-Aromaten) mit Glasübergangstemperaturen von größer 75 °C genutzt werden wie zum Beispiel $\alpha$-methylstyrolhaltige Aromatenblöcke. Weiterhin können auch gleiche oder unterschiedliche A-Blöcke enthalten sein.

Vorzugsweise umfassen dabei die Vinylaromaten zum Aufbau des Blocks A Styrol, $\alpha$-Methylstyrol und/oder andere Styrol-Derivate. Der Block A kann somit als Homo- oder Copolymer vorliegen. Besonders bevorzugt ist der Block A ein Polystyrol.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien und Dimethylbutadien sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teilhydriertes Derivat eines dieser beiden Polymere wie insbesondere Polybutylenbutadien, oder ein Polymer aus einem Gemisch aus Butadien und Isopren. Ganz besonders bevorzugt ist der Block B ein Polybutadien.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 25 °C, insbesondere mindestens 50 °C und für B-Blöcke höchstens 25 °C, insbesondere höchstens -25 °C) wider.

Die Haftklebrigkeit der Selbstklebemassen auf Basis eines Blends von Acrylat und Vinylaromatenblockcopolymer kann durch Zugabe von mit der Elastomerphase mischbaren Klebharzen erreicht werden. Die Selbstklebemassen weisen in der Regel neben dem mindestens einen Vinylaromatenblockcopolymer mindestens ein Klebharz auf, um die Adhäsion in gewünschter Weise zu erhöhen. Das Klebharz sollte mit dem Elastomerblock der Blockcopolymere verträglich sein.

Unter einem "Klebharz" (Klebrigmacher) wird entsprechend dem allgemeinem Fachmannverständnis ein niedermolekulares, oligomeres oder polymeres Harz verstanden, das die Adhäsion (den Tack, die Eigenklebrigkeit) der Selbstklebemasse im Vergleich zu der kein Klebharz enthaltenden, ansonsten aber identischen Selbstklebemasse erhöht.

Falls in den Selbstklebemassen Klebharz enthalten ist, wird, vorzugsweise zu mindestens 75 Gew.-% bezogen auf den Gesamtharzanteil, ein Harz gewählt mit einem DACP (diacetone alcohol cloud point) von größer 0 °C, bevorzugt größer 10 °C, einem MMAP (mixed methylcyclohexane aniline point) von mindestens 50 °C, bevorzugt von mindestens 60 °C, und/oder einer Erweichungstemperatur (Ring & Ball) von größer gleich 70 °C, vorzugsweise größer gleich 100 °C. Besonders bevorzugt weist das genannte Klebharz gleichzeitig einen DACP-Wert von kleiner 50 °C auf, sofern keine Isoprenblöcke in der Elastomerphase vorliegen, oder von kleiner 65 °C auf, sofern Isoprenblöcke in der Elastomephase vorliegen. Ebenso besonders bevorzugt weist das genannte Klebharz gleichzeitig einen MMAP-Wert von höchstens 90 °C auf, sofern keine Isoprenblöcke in der Elastomerphase vorliegen, oder von höchstens 100 °C auf, sofern Isoprenblöcke in der Elastomephase vorliegen. Ebenso besonders bevorzugt beträgt die Erweichungstemperatur des genannten Klebharzes bis zu 150 °C.

Besonders bevorzugt handelt es sich bei den Klebharzen um Kohlenwasserstoff-harze oder Terpenharze oder eine Mischung dergleichen, insbesondere zu mindestens 75 Gew.-% bezogen auf den Gesamtharzanteil.

Es wurde gefunden, dass als Klebrigmacher für die Selbstklebemassen insbesondere unpolare Kohlenwasserstoffharze, zum Beispiel hydrierte und nicht hydrierte Polymerisate des Dicyclopentadiens, nicht hydrierte, partiell, selektiv oder vollständig hydrierte Kohlenwasserstoffharze auf Basis von $C_5$-, $C_5/C_9$- oder $C_9$-Monomerströmen, Polyterpenharze auf Basis von $\alpha$-Pinen und/oder ß-Pinen und/oder $\delta$-Limonen vorteilhaft eingesetzt werden können. Vorgenannte Klebharze können sowohl allein als auch im Gemisch eingesetzt werden. Dabei können sowohl bei Raumtemperatur (20 °C) feste als auch flüssige Harze zum Einsatz kommen. Klebharze, hydriert oder nicht hydriert, die auch Sauerstoff enthalten, können optional bevorzugt bis zu einem maximalen Anteil von 25 % bezogen auf die Gesamtmasse der Harze in der Klebemasse eingesetzt werden, so zum Beispiel Kolophonium- und/oder Kolophoniumesterharze und/oder Terpenphenolharze.

Der Anteil der bei Raumtemperatur (20 °C) optional einsetzbaren flüssigen Harze bzw. Weichmacher beträgt gemäß einer bevorzugten Variante bis zu 15 Gew.-%, vorzugsweise bis zu 10 Gew.-% bezogen auf die gesamte Selbstklebemasse.

Als weitere Additive einer Selbstklebemasse auf Basis eines Blends von Acrylat und Vinylaromatenblockcopolymer können typischerweise genutzt werden:

- Plastifizierungsmittel wie zum Beispiel Weichmacheröle, oder niedermolekulare flüssige Polymere, wie zum Beispiel niedermolekulare Polybutene, vorzugsweise mit einem Anteil von 0,2 bis 5 Gew.-% bezogen auf das Gesamtgewicht der Selbstklebemasse
- primäre Antioxidantien wie zum Beispiel sterisch gehinderte Phenole, vorzugsweise mit einem Anteil von 0,2 bis 1 Gew.-% bezogen auf das Gesamtgewicht der Selbstklebemasse
- sekundäre Antioxidantien, wie zum Beispiel Phosphite, Thioester oder Thioether, vorzugsweise mit einem Anteil von 0,2 bis 1 Gew.-% bezogen auf das Gesamtgewicht der Selbstklebemasse
- Prozessstabilisatoren wie zum Beispiel C-Radikalfänger, vorzugsweise mit einem Anteil von 0,2 bis 1Gew.-% bezogen auf das Gesamtgewicht der Selbstklebemasse

- Lichtschutzmittel wie zum Beispiel UV-Absorber oder sterisch gehinderte Amine, vorzugsweise mit einem Anteil von 0,2 bis 1 Gew.-% bezogen auf das Gesamtgewicht der Selbstklebemasse
- Verarbeitungshilfsmittel, vorzugsweise mit einem Anteil von 0,2 bis 1 Gew.-% bezogen auf das Gesamtgewicht der Selbstklebemasse
- Endblockverstärkerharze, vorzugsweise mit einem Anteil von 0,2 bis 10 Gew.-% bezogen auf das Gesamtgewicht der Selbstklebemasse sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, $\alpha$-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine,

vorzugsweise mit einem Anteil von 0,2 bis 10 Gew.-% bezogen auf das Gesamtgewicht der Selbstklebemasse.

Die Art und Menge der Abmischkomponenten kann bedarfsweise ausgewählt werden. Erfindungsgemäß ist es auch, wenn die Klebemasse einige, vorzugsweise alle der genannten Zuschlagstoffe jeweils nicht aufweist.

In einer Ausführungsform der vorliegenden Erfindung enthält die Selbstklebemasse auf Basis eines Blends von Acrylat und Vinylaromatenblockcopolymer auch weitere Additive, beispielhaft, aber nicht einschränkend erwähnt seien kristalline oder amorphe Oxide, Hydroxide, Carbonate, Nitride, Halogenide, Carbide oder gemischte Oxid-/Hydroxid-/Halogenidverbindungen des Aluminiums, Siliciums, Zirkoniums, Titans, Zinns, Zinks, Eisens oder der (Erd)alkalimetalle. Hierbei handelt es sich im Wesentlichen um Tonerden zum Beispiel Aluminiumoxide, Boehmit, Bayerit, Gibbsit, Diaspor und ähnliche. Ganz besonders geeignet sind Schichtsilicate wie beispielsweise Bentonit, Montmorillonit, Hydrotalcit, Hectorit, Kaolinit, Boehmit, Glimmer, Vermiculit oder deren Mischungen. Aber auch Ruße oder weitere Modifikationen des Kohlenstoffs, etwa Kohlenstoffnanoröhrchen, können verwendet werden.

Die Klebemassen können auch mit Farbstoffen oder Pigmenten eingefärbt sein. Die Klebemassen können weiß, schwarz oder farbig sein. Als Weichmacher können zum Beispiel Mineralöle, (Meth)Acrylat-Oligomere, Phthalate, Cyclohexandicarbonsäureester, wasserlösliche Weichmacher, Weichharze, Phosphate oder Polyphosphate zudosiert werden. Die Beigabe von Kieselsäuren, vorteilhaft von gefällter, mit Dimethyldichlorsilan oberflächenmodifizierter Kieselsäure, kann genutzt werden, um die Wärmescherfestigkeit der Selbstklebemasse noch weiter zu steigern.

Die erfindungsgemäße Schäumung erfolgt typischerweise jeweils durch das Einbringen und nachfolgende Expandieren von Mikroballons.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärme-einwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Da die polymere Hülle bei der Schäumung erhalten bleibt, erzielt man einen geschlossenzelligen Schaum.

Es ist eine Vielzahl an unexpandierten Mikroballontypen kommerziell erhältlich, welche sich im Wesentlichen über ihre Größe und ihre zur Expansion benötigten Starttemperaturen (75 bis 220 °C) differenzieren. Ein Beispiel für kommerziell erhältliche unexpandierte Mikroballons sind die Expancel® DU-Typen (DU = dry unexpanded) von der Firma Akzo Nobel. In der Typenbezeichnung Expancel xxx DU yy steht dabei "xxx" für die Zusammensetzung der Mikroballonabmischung, und "yy" für die Größe der Mikroballons im expandierten Zustand.

Unexpandierte Mikroballontypen sind auch als wässrige Dispersion mit einem Feststoff- beziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten Selbstklebemasse geeignet.

Im erfindungsgemäßen Verfahren kann als schäumbare Selbstklebemasseschicht auch eine Selbstklebemasseschicht eingesetzt werden, die bereits bis zum gewünschten Grad vorexpandierte, d.h. teilexpandierte, Mikroballons enthält. Typischerweise findet die Teilexpansion schon vor der Einmischung in die Polymermatrix statt.

Bei der Verarbeitung von bereits teilexpandierten Mikroballontypen kann es passieren, dass die Mikroballons aufgrund ihrer geringen Dichte in der Polymermatrix, in die diese eingearbeitet werden sollen, zur Flotation neigen, also in der Polymermatrix während des Verarbeitungsprozesses "nach oben" aufschwimmen. Dies führt zu einer ungleichmäßigen Verteilung der Mikroballons in der Schicht. Im oberen Bereich der Schicht (z-Richtung) sind mehr Mikroballons anzutreffen als im unteren Bereich der Schicht, so dass sich ein Dichtegradient über die Schichtdicke einstellt.

Um einen solchen Dichtegradienten weitgehend oder nahezu vollständig zu verhindern, werden erfindungsgemäß bevorzugt nicht oder nur wenig vorexpandierte Mikroballons in die Polymermatrix der Selbstklebemasseschicht eingearbeitet. Die Mikroballons werden erst nach dem Einarbeiten, Beschichten, Trocknen (Lösungsmittelabdampfen) auf den gewünschten Schäumungsgrad expandiert. Erfindungsgemäß bevorzugt werden daher DU-Typen verwendet.

Die Mikroballons können der Formulierung der Selbstklebemasse als Batch, Paste oder als unverschnittenes oder verschnittenes Pulver zugeführt werden. Des Weiteren können sie in Lösungsmittel suspendiert vorliegen.

Eine erfindungsgemäße expandierbare Mikrohohlkugeln enthaltende Selbstklebemasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

In einer weiteren bevorzugten Ausführungsform basieren die Selbstklebemasseschichten auf Acrylatmassen.

Zur Erzielung haftklebriger Eigenschaften sollte sich die Klebmasse bei der Verarbeitungstemperatur oberhalb ihrer Glastemperatur befinden, um viskoelastische Eigenschaften zu haben. Die Glasübergangstemperatur der Haftklebemasseformulierung (Polymer-Klebrigmachermischung) liegt daher bevorzugt unterhalb von +15 °C. Durch den eventuellen Zusatz von Klebharz erhöht sich die Glasübergangstemperatur zwangsläufig, je nach Zugabemenge, Verträglichkeit und Erweichungstemperatur um ca. 5 bis 40 K. Es sind daher Polyacrylate mit einer Glasübergangstemperatur von höchstens 0 °C bevorzugt.

Vorzugsweise wird das Polyacrylat durch radikalische Polymerisation von (Meth)Acrylsäure bzw. Estern davon und gegebenenfalls weiteren, copolymerisierbaren Monomeren erhalten.

Erfindungsgemäß kann es sich bei dem Polyacrylat um ein mit Epoxidgruppen vernetzbares Polyacrylat handeln. Entsprechend werden als Monomere oder Comonomere bevorzugt funktionelle, mit Epoxidgruppen vernetzungsfähige Monomere eingesetzt. Es kommen insbesondere Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen zur Anwendung; bevorzugt sind carbonsäuregruppenhaltige Monomere. Es ist insbesondere vorteilhaft, wenn das Polyacrylat einpolymerisierte Acrylsäure und/oder Methacrylsäure aufweist. Weitere Monomere, die als Comonomere für das Polyacrylat verwendet werden können, sind zum Beispiel Acrylsäure- und/oder Methacrylsäureester mit bis zu 30 C-Atomen, Vinylester von bis zu 20 C-Atome enthaltenden Carbonsäuren, Vinylaromaten mit bis zu 20 C-Atomen, (Meth)acrylamid, Maleinsäureanhydrid, ethylenisch ungesättigte Nitrile, Vinylhalogenide, Vinylester, insbesondere Vinylacetat, Vinylalkohole, Vinylether von 1 bis 10 C-Atome enthaltenden Alkoholen, aliphatische Kohlenwasserstoffe mit 2 bis 8C-Atomen und 1 oder 2 Doppelbindungen oder Mischungen dieser Monomeren. Der Restlösungsmittel-Gehalt sollte unter 1 Gew.-% betragen.

Vorzugsweise wird ein Polyacrylat eingesetzt, das auf die folgende Monomerzusammensetzung zurückgeführt werden kann:

(i) Acrylsäure(ester) und/oder Methacrylsäure(ester) der folgenden Formel $CH_2=C(R^1)(COOR^2)$
wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt,
(ii) optional olefinisch ungesättigte Comonomere mit funktionellen Gruppen, die eine Vernetzbarkeit mit Epoxidgruppen bewirken,
(iii) optional weitere Acrylate und/oder Methacrylate und/oder olefinisch ungesättigte Monomere, die mit der Komponente (i) copolymerisierbar sind.

Es ist zur Herstellung des Polyacrylats sehr vorteilhaft, die Monomere (i) mit einem Anteil von 45 bis 99 Gew.-%, die Monomere (ii) mit einem Anteil von 1 bis 15 Gew.-% und die Monomere der Komponente (iii) mit einem Anteil von 0 bis 40 Gew.-% zu wählen (die Angaben sind bezogen auf die eingesetzte Monomermischung).

Die Monomere der Komponente (i) sind insbesondere weichmachende und/oder unpolare Monomere. Vorzugsweise sind die Monomere (i) Acryl- und/oder Methacrylsäureester mit Alkylgruppen von 4 bis 18C-Atomen, bevorzugt 4 bis 9C-Atomen. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat und deren verzweigten Isomere wie zum Beispiel 2-Ethylhexylacrylat oder 2-Ethylhexylmethacrylat.

Bevorzugt werden für die Komponente (ii) Monomere mit solchen funktionellen Gruppen eingesetzt, die aus der folgenden Aufzählung ausgewählt sind: Hydroxy-, Carboxy-, Sulfonsäure- oder Phosphonsäuregruppen, Säureanhydride, Epoxide, Amine. Besonders bevorzugte Beispiele für Monomere (ii) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Beispielhaft genannte Monomere für die Komponente (iii) sind: Methylacrylat, Ethylacrylat, Propylacrylat, Methylmethacrylat, Ethylmethacrylat, Benzylacrylat, Benzylmethacrylat, sek.-Butylacrylat, tert. Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufuryl-acrylat, Diethylaminoethylacrylat, Diethylaminoethylmethacrylat, Dimethylaminoethylacrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexa-fluoroisopropylacrylat, 1,1,1,3,3,3-Hexafluoroisopropylmethacrylat, 2,2,3,3,3-Pentafluoro-propylmethacrylat, 2,2,3,4,4,4-Hexafluorobutylmethacrylat, 2,2,3,3,4,4,4-Heptafluoro-butylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropyl-methacrylamid, N-(1-Methyl-undecyl)acrylamid, N-(n-Butoxymethyl)acrylamid, N-(Butoxymethyl)methacrylamid, N (Ethoxymethyl)-acrylamid, N-(n-Octadecyl)acrylamid, weiterhin N,N-Dialkyl-substituierte Amide wie beispielsweise N,N-Dimethylacrylamid, N,N-Dimethylmethacrylamid, N-Benzylacrylamide, N Isopropylacrylamid, N-tert. Butylacrylamid, N-tert. Octylacrylamid, N-Methylolacrylamid, N-Methylolmethacrylamid, Acrylnitril, Methacrylnitril, Vinylether wie Vinylmethylether, Ethylvinylether, Vinylisobutylether, Vinylester wie Vinylacetat, Vinylchlorid, Vinylhalogenide, Vinylidenchlorid, Vinylidenhalogenide, Vinylpyridin, 4 Vinylpyridin, N-Vinylphthalimid, N- Vinyllactam, N-Vinylpyrrolidon, Styrol, $\alpha$ und p-Methylstyrol, $\alpha$-Butylstyrol, 4-n-Butylstyrol, 4-n-Decylstyrol, 3,4-Dimethoxystyrol, Makromonomere wie 2-Polystyrolethylmethacrylat und Poly(methylmeth-acrylat)-ethylmethacrylat.

Die Monomermischung kann weiter vorzugsweise (I) 90 bis 99 Gew.-% n-Butylacrylat und/oder 2-Ethylhexylacrylat sowie (II) 1 bis 10 Gew.-% eines ethylenisch ungesättigten Monomers mit einer Säure- oder Säureanhydridfunktion umfassen, wobei sich bevorzugt (I) und (II) zu 100 Gew.-% addieren. Bevorzugt bildet das Monomer (I) eine Mischung aus 2-Ethylhexylacrylat und n Butylacrylat, weiter vorzugsweise zu gleichen Teilen. Als Monomer (II) kommen vorteilhaft in Betracht zum Beispiel Acrylsäure, Methacrylsäure, Itaconsäure, Maleinsäure, Fumarsäure und/oder Maleinsäureanhydrid. Bevorzugt sind Acrylsäure oder Methacrylsäure, gegebenenfalls eine Mischung aus beiden.

In einer alternativen Ausführungsform basieren die Selbstklebemasseschichten auf einem Blend von Acrylat und, vorzugsweise chemisch oder physikalisch vernetztem, Synthesekautschuk wie zum Beispiel Vinylaromatenblockcopolymer. Die Selbstklebemasseschichten umfassen somit zumindest die folgenden beiden Komponenten:

(P) eine Polyacrylatkomponente, d.h. Polyacrylat, und

(E) eine mit der Polyacrylatkomponente im Wesentlichen nicht mischbare Elastomerkomponente, die durch einen oder mehrere Synthesekautschuke, wie Vinylaromatenblockcopolymere, gebildet wird, d.h. Synthesekautschuk wie Vinylaromatenblockcopolymer. Hinsichtlich des bevorzugten Aufbaus der Polyacrylate und Vinylaromatenblockcopolymere gelten die vorstehenden Ausführungen zu den Vinylaromatenblockcopolymermassen und von Acrylatmassen analog. Die Klebemasse weist somit zumindest zwei separaten Phasen auf. Insbesondere bildet die eine Phase eine Matrix und die andere Phase eine Vielzahl in der Matrix angeordneter Domänen aus. Die Polyacrylatkomponente (P) stellt für sich bevorzugt eine homogene Phase dar. Die Elastomerkomponente (E) kann in sich homogen vorliegen, oder in sich selbst Mehrphasigkeit aufweisen, wie es von mikrophasenseparierenden Blockcopolymeren bekannt ist.

Ein geeignetes Analysesystem für eine Phasentrennung ist beispielweise die Raster-Elektronenmikroskopie. Phasenseparation kann sich aber beispielweise auch dadurch erkennen lassen, dass die unterschiedlichen Phasen zwei voneinander unabhängige Glasübergangstemperaturen aufweisen.

Polyacrylat- und Elastomerkomponente sind vorliegend so gewählt, dass sie - nach inniger Vermengung - bei 20 °C (also der üblichen Anwendungstemperatur für Klebemassen) im Wesentlichen nicht mischbar sind. Sehr bevorzugt sind die Polyacrylatkomponente (P) und die Elastomerkomponente (E) in einem Temperaturbereich von 0 °C bis 50 °C, noch mehr bevorzugt von - 30 °C bis 80 °C im Wesentlichen nicht mischbar. "Im Wesentlichen nicht mischbar" bedeutet, dass die Komponenten entweder gar nicht homogen miteinander mischbar sind, so dass keine der Phasen einen Anteil der zweiten Komponente homogen eingemischt aufweist, oder dass die Komponenten nur so wenig teilverträglich sind - dass also eine oder beide Komponenten nur einen so geringen Anteil der jeweils anderen Komponente homogen aufnehmen kann -, dass die Teilverträglichkeit für die Erfindung unwesentlich ist, also die erfindungsgemäße Lehre nicht schädlich ist. Die entsprechenden Komponenten werden im Sinne dieser Schrift dann als "im Wesentlichen frei" von der jeweils anderen Komponente angesehen.

Die Phase der Polyacrylatkomponente (P) und/oder der Elastomerkomponente (E) kann als 100 %-System vorliegen, das heißt sie enthält in diesem Fall neben der eigentlichen Polyacrylatkomponente (P) bzw. Elastomerkomponente (E) keine weiteren Komponenten. Beispielsweise umfasst die gesamte Klebemasse außer den beiden Komponenten (P) und (E) keine weiteren Bestandteile. In einer alternativen Ausführungsform sind einer der oder beiden Komponenten (P) und (E) weitere Komponenten beigemischt, wie beispielweise Harze, Additiven oder dergleichen.

Die Polyacrylatkomponente (P) liegt in einem Anteil von 60 Gew.-% bis 90 Gew.-%, bevorzugter 65 Gew.-% bis 85 Gew.-%, und die Elastomerkomponente (E) in einem Anteil von 10 Gew.-% bis 40 Gew.-%, bevorzugter 15 Gew.-% bis 35 Gew.-%, an der Gesamtheit (100 Gew.-%) aus den beiden Komponenten (P) und (E) vor.

Die Phasentrennung für die erfindungsgemäß eingesetzten Klebemassen findet insbesondere derart statt, dass die Elastomerkomponente (E) dispergiert in einer kontinuierlichen Matrix der Polyacrylatkomponente (P) vorliegt. Die durch die Elastomerkomponente (E) gebildeten Bereiche (Domänen) liegen bevorzugt im Wesentlichen kugelförmig vor. Andere Domänenformen sind ebenfalls möglich, so zum Beispiel schichtförmige oder stäbchenförmige.

Die Selbstklebemasseschicht auf Basis einer Acrylatmasse oder auf Basis eines Blends von Acrylat und Synthesekautschuk enthält vorzugsweise Vernetzer, typischerweise zur Vernetzung des Acrylats. Eine Vernetzung wird zur Erzielung gewünschter Eigenschaften der Selbstklebemasse durchgeführt, beispielsweise um eine hinreichende Kohäsion der Selbstklebemasse zu erreichen.

Vernetzer sind solche - insbesondere bi- oder polyfunktionelle, meist niedermolekulare - Verbindungen, die unter den gewählten Vernetzungsbedingungen mit geeigneten - insbesondere funktionellen - Gruppen der zu vernetzenden Polymere reagieren können, somit zwei oder mehrere Polymere oder Polymerstellen miteinander verknüpfen ("Brücken" bilden) und somit ein Netzwerk aus dem zu vernetzenden Polymer beziehungsweise den zu vernetzenden Polymeren schaffen. Hierdurch kommt es in der Regel zur Kohäsionserhöhung. Der Vernetzungsgrad hängt von der Zahl der gebildeten Brücken ab.

Als Vernetzer sind vorliegend prinzipiell alle dem Fachmann bekannten Vernetzer-Systeme für die Ausbildung insbesondere kovalenter, koordinativer oder assoziativer Bindungssysteme mit entsprechend ausgestatteten Polyacrylaten geeignet, je nach Natur der in den Polyacrylaten vorliegenden funktionellen Gruppen. Beispiele für chemische Vernetzungssysteme sind di- oder mehrfachfunktionale Isocyanate, dioder mehrfachfunktionale Epoxide, di- oder mehrfachfunktionale Hydroxide, di- oder mehrfachfunktionale Amine oder di- oder mehrfachfunktionale Säureanhydride. Kombinationen verschiedener Vernetzer sind ebenso denkbar. Besonders bevorzugt sind di- oder mehrfachfunktionale Epoxide; dies können sowohl aromatische als auch aliphatische Verbindungen sein, sie können außerdem auch in oligomerer oder polymerer Form eingesetzt werden. Als weitere geeignete Vernetzer seien ChelatBildner genannt, die in Kombination mit Säurefunktionalitäten in Polymerketten Komplexe bilden, die als Vernetzungspunkte wirken.

Als besonders vorteilhaft hat es sich erwiesen, als Vernetzer 0,03 bis 0,2 Gewichtsteile, insbesondere 0,04 bis 0,15 Gewichtsteile N,N,N',N'-tetrakis(2,3-epoxypropyl)-m-xylen-a,a'-diamin (Tetraglycidyl-meta-Xylendiamin; CAS 63738-22-7), bezogen auf 100 Gewichtsteile Polyacrylat-Basispolymer, einzusetzen.

Zur Vernetzung ist es von Vorteil, wenn zumindest ein Teil der Polyacrylate funktionelle Gruppen aufweisen, mit denen die jeweiligen Vernetzer zur Reaktion kommen können. Bevorzugt werden hierfür bei der Herstellung der Polyacrylate Monomere mit funktionellen Gruppen eingesetzt, die ausgewählt sind aus der Gruppe umfassend Hydroxy-, Carboxy-, Sulfonsäure- oder Phosphonsäuregruppen, Säureanhydride, Epoxide, Amine. Besonders bevorzugte Beispiele für Monomere für vernetzbare Polyacrylate sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, Hydroxypropylacrylat, Hydroxyethyl-methacrylat, Hydroxypropylmethacrylat, 6-Hydroxyhexylmethacrylat, Allylalkohol, Glycidylacrylat, Glycidylmethacrylat.

Auch weil prinzipiell auch strahleninduzierte Vernetzung des Polyacrylats möglich ist, sind Vernetzer aber nicht zwingend vorhanden. Alternativ oder zusätzlich zur chemischen Vernetzung kann es vorteilhaft sein, die Klebemasse strahleninduziert zu vernetzen. Hierzu bieten sich als Strahlung ultraviolettes Licht (vor allem, wenn der Formulierung geeignete Photoinitiatoren zugesetzt sind oder zumindest ein Polyacrylat Comonomere mit Einheiten photoinitiierender Funktionalität enthält) und/oder Elektronenstrahlen an. Für die strahleninduzierte Vernetzung kann es von Vorteil sein, wenn ein Teil der bei der Herstellung der Polyacrylate eingesetzten Monomere funktionelle Gruppen enthalten, die eine nachfolgende strahleninduzierte Vernetzung unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-tert-Butylacrylamid und Allylacrylat.

Die chemische Vernetzung kann dabei insbesondere wie folgt ablaufen:
In einer vorteilhaften Vorgehensweise wird der Vernetzer als Reinstoff oder in einem geeigneten Lösemittel vorgelöst zu einer das Polyacrylat enthaltenden Lösung gegeben, dann wird gut durchgemischt, und die Mischung anschließend auf einen Liner oder Träger beschichtet und dann unter geeigneten Bedingungen getrocknet, wobei das Polyacrylat vernetzt wird.

Die Trocknungsbedingungen (Temperatur und Verweilzeit) werden sehr bevorzugt so gewählt, dass nicht nur das Lösungsmittel entfernt wird, sondern auch die Vernetzung zu einem Großteil abgeschlossen ist, so dass bereits während der Trocknung ein stabiles Vernetzungsniveau - auch bei höheren Anwendungstemperaturen - erreicht wird. Die Klebemasse vernetzt nach der Trocknung, beispielsweise während der anschließenden Schäumung bzw. Lagerung, häufig noch nach.

Die erfindungsgemäßen Selbstklebemasseschichten auf Basis einer Acrylatmasse oder eines Blends von Acrylat und Synthesekautschuk enthalten ferner expandierbare Mikroballons und gegebenenfalls weitere Bestandteile wie insbesondere Klebharze und/oder Additive. Hinsichtlich der Art und Menge der Mikroballons und gegebenenfalls weiteren Bestandteile gelten die Ausführungen zu den Vinylaromatenblockcopolymermassen analog.

Die im erfindungsgemäßen Verfahren eingesetzte schäumbare Selbstklebemasseschicht enthaltend expandierbare Mikroballons wird üblicherweise aus Lösung bereitgestellt.

In einem typischen Verfahren zur Herstellung der schäumbaren Selbstklebemasseschicht werden die Bestandteile der Klebemasse, wie das Basispolymer/die Basispolymere und gegebenenfalls weitere Komponenten wie Klebharz, Alterungsschutzmittel, Weichmacher, Flammschutzmittel und/oder Vernetzer, in einem Lösemittel(gemisch) wie zum Beispiel Benzin/Toluol/Aceton, Benzin/Aceton oder Benzin gelöst. Dabei wird üblicherweise ein Kneter, ein Rührer, eine Rollbank oder eine ähnliche handelsübliche Mischvorrichtung eingesetzt. Das Basispolymer kann dabei in einer Ausführungsform bereits als Lösung in dem Lösungsmittel(gemisch), in dem es hergestellt worden ist, bereitgestellt werden. Beispielweise kann ein Polyacrylat bereits als Lösung in Benzin/Aceton eingesetzt werden. Die expandierbaren Mikroballons werden, zum Beispiel in Benzin oder Benzin/Aceton, angeschlämmt und in die Klebemasselösung eingerührt, so dass sich eine homogene schäumbare Selbstklebemasse ergibt. Um die Entstehung von Mikroballonagglomeraten zu verhindern, wird darauf geachtet, dass die expandierbaren Mikroballons beim Abschlämmen vollständig von einem Lösungsmittel benetzt werden. Sobald die Mikroballons homogen in der Lösung verteilt sind, kann die Selbstklebemasse auf einen zur Verwendung im erfindungsgemäßen Verfahren geeigneten Liner beschichtet werden, insbesondere einen beidseitig silikonisierten PET-Liner einer Dicke von 50 bis 75 $\mu$m. Es können verschiedene Beschichtungssysteme gemäß des Standes der Technik eingesetzt werden. Beispielsweise kann die Beschichtung durch eine (Komma)Rakel, einen Streichbalken oder eine Düse erfolgen.

Im nächsten Schritt wird die beschichtete Klebemasse bei einer Temperatur getrocknet, bei der noch keine Expansion der Mikroballons einsetzt, und ggf. vernetzt. Die zur Expansion benötigte Starttemperatur hängt vom Mikroballontyp ab und kann zwischen 75 bis 220 °C liegen. Beispielsweise wird in einem Trockenofen bei 100 °C für 15 min getrocknet. Alternativ kann die Klebemasse beim Trocknungsschritt auch ein Temperaturprogramm durchlaufen, typischerweise indem die Klebemasse einen Trockenkanal mit mehreren Heizzonen verschiedener Temperatur (beispielsweise von 30 bis 120 °C) durchläuft, beispielsweise mit einer Bahngeschwindigkeit von 15 m/min. Bei einem solchen Trockenkanal kann es sich zum Beispiel um einen Trockenkanal mit sieben Heizzonen und einer Kühlzone mit einer Länge von 3 m pro Zone, handeln. Zur optimalen Trocknung wird das Temperaturmaximum dabei typischerweise knapp unterhalb der zur Expansion der Mikroballons benötigten Starttemperatur gesetzt. In keinem der vorgenannten Schritte kommt es somit zu einer Expansion der Mikroballons.

Die offene Seite der getrockneten Selbstklebemasseschicht wird anschließend mit einem weiteren zur Verwendung im erfindungsgemäßen Verfahren geeigneten Liner eingedeckt. Es ergibt sich ein Transfertape.

Alternativ lässt sich ein einseitiges Klebeband bereitstellen, indem anstelle des Liners, auf den die Selbstklebemasse beschichtet wird, oder des Liners, mit dem die offene Seite der getrockneten Selbstklebemasseschicht eingedeckt wird, ein Träger verwendet wird.

Kaschiert man vor dem Schäumen auf die Oberfläche des Trägers des einseitigen Klebebands eine zweite ebenfalls getrocknete schäumbare Selbstklebemasseschicht enthaltend expandierbare Mikroballons, die ihrerseits auf einem zur Verwendung im erfindungsgemäßen Verfahren geeigneten Liner aufgebracht ist, so ergibt sich ein Dreischichtprodukt aus einem innenliegenden Träger und zwei in direktem Kontakt mit dem Träger stehenden schäumbaren Selbstklebeschichten enthaltend expandierbare Mikroballons, die auf ihren Außenflächen wiederum mit Linern versehen sind. Dabei handelt es sich um ein doppelseitiges trägerhaltiges Klebeband. Die zweite schäumbare Selbstklebemasseschicht kann dabei wie die erste schäumbare Selbstklebemasseschicht hergestellt werden.

Ein solches Dreischichtverbund lässt sich alternativ auch dadurch bereitstellen, dass der Träger gleichzeitig oder nacheinander direkt mit den schäumbaren Selbstklebemassen enthaltend expandierbare Mikroballons beschichtet wird, woraufhin die Selbstklebemasseschichten, beispielsweise bei 100 °C für 15 min, getrocknet und dann mit zur Verwendung im erfindungsgemäßen Verfahren geeigneten Linern abgedeckt werden.

Anschließend werden die schäumbare(n) Selbstklebemasseschicht(en), die zwischen den Linern bzw. Trägern angeordnet sind, bei einer zur Schäumung geeigneten Temperatur für einen solchen Zeitraum wärmebehandelt, dass nach dem anschließenden Abkühlen der Schicht(en) der gewünschte Schäumungsgrad erreicht wird. Die Liner sind dabei wie bereits vorstehend erläutert so ausgewählt, dass sie während der Schäumung im Wesentlichen vollständig auf der jeweiligen Oberfläche der schäumbaren Selbstklebemasseschicht(en), auf der sie angeordnet sind, haften bleiben. Es ergeben sich mit Mikroballons zumindest teilgeschäumte Selbstklebemasseschichten.

Wie bereits vorstehend beschrieben, kann die schäumbare Selbstklebemasseschicht alternativ zwischen einem Liner und einer weiteren Selbstklebemasseschicht angeordnet werden, indem eine Selbstklebemasse enthaltend expandierbare Mikroballons aus einer Lösung auf einen Liner aufgebracht und unterhalb der Schäumungstemperatur getrocknet wird, und auf die dem Liner gegenüberliegende Oberfläche der getrockneten schäumbaren Selbstklebemasseschicht eine, auf einen Liner oder Träger aufgebrachte, weitere Selbstklebemasseschicht kaschiert wird. Die weitere Selbstklebemasseschicht kann nicht schäumbar oder schäumbar sein, wobei sie vorzugsweise expandierbare Mikroballons enthält. Es ergibt sich ein schäumbares Transfertape bzw. schäumbares einseitiges Klebeband. Wird eine auf einem Liner angeordnete getrocknete schäumbare Selbstklebemasseschicht auf beide Seiten eines Trägers kaschiert, auf dem wiederum beidseitig jeweils eine weitere Selbstklebemasseschicht angeordnet ist, so ergibt sich außerdem ein schäumbares doppelseitiges Klebeband mit Träger, d.h. trägerhaltiges Klebeband. Die anschließende Expansion auf den gewünschten Schäumungsgrad, wie vorstehend beschrieben, liefert das entsprechende geschäumte Klebeband.

Die zur Schäumung notwendige Energie wird erfindungsgemäß vorzugsweise durch Konvektion, Strahlung wie (N)IR- oder UV-Strahlung, oder durch Wärmeleitung auf den Verbund aus schäumbarer Selbstklebemasseschicht, Liner und gegebenenfalls Träger und/oder weiterer Selbstklebemasseschicht übertragen.

Insbesondere kann die zur Schäumung notwendige Energie durch Wärmeleitung gleichmäßig über die Bahnbreite auf den Verbund übertragen wird, beispielsweise durch eine oder mehrere geheizte Walzen. In einer besonders bevorzugten Ausführungsform wird dabei eine Abfolge aus mindestens zwei geheizten Walzen eingesetzt, wobei der Verbund so über die mindestens zwei Walzen geführt wird, dass die Oberflächen des Verbunds wechselseitig die Walzenoderflächen berühren. Hierbei ist der Abstand der Walzen stets größer als die Dicke des Verbunds, insbesondere übt kein Walzenpaar Druck auf den Verbund auf.

Alternativ kann zur Schäumung ein Trockenofen oder ein Trockenkanal eingesetzt werden. Der Trockenkanal kann dabei beispielsweise wie vorstehend zur Trocknung beschrieben aufgebaut sein. Bei Schäumung im Trockenkanal spricht man auch von einer Kanalschäumung.

Die zur Schäumung geeignete Temperatur hängt vom eingesetzten Mikroballontyp ab. Wie vorstehend erläutert, kann die zur Expansion benötigte Starttemperatur abhängig vom eingesetzten Mikroballontyp zwischen 75 bis 220 °C liegen. Beispielsweise liegt die Schäumungstemperatur 10 bis 50 °C oberhalb der zur Expansion benötigten Starttemperatur des eingesetzten Mikroballontyps. Typische Schäumungstemperaturen liegen im Bereich von 130 bis 180 °C, wie zum Beispiel 160 bis 170 °C. Neben der Schäumungstemperatur wird der Schäumungsgrad ferner durch die Schäumungsdauer bestimmt. Eine typische Schäumungsdauer liegt im Bereich von 10 bis 60 s. Wird zur Schäumung der vorstehend genannte Trockenkanal eingesetzt, so kann das Temperaturprogramm der sieben Heizzonen beispielsweise startend mit 40°C, über 90°C und 2 Zonen 140°C bis zu 170°C für 3 Zonen betragen. Typische Bahngeschwindigkeiten liegen im Bereich von 30 m/min bis 100 m/min.

## Figuren

Anhand der nachfolgend beschriebenen Figuren werden besonders vorteilhafte Ausführungen der Erfindung näher erläutert, ohne damit die Erfindung unnötig einschränken zu wollen.

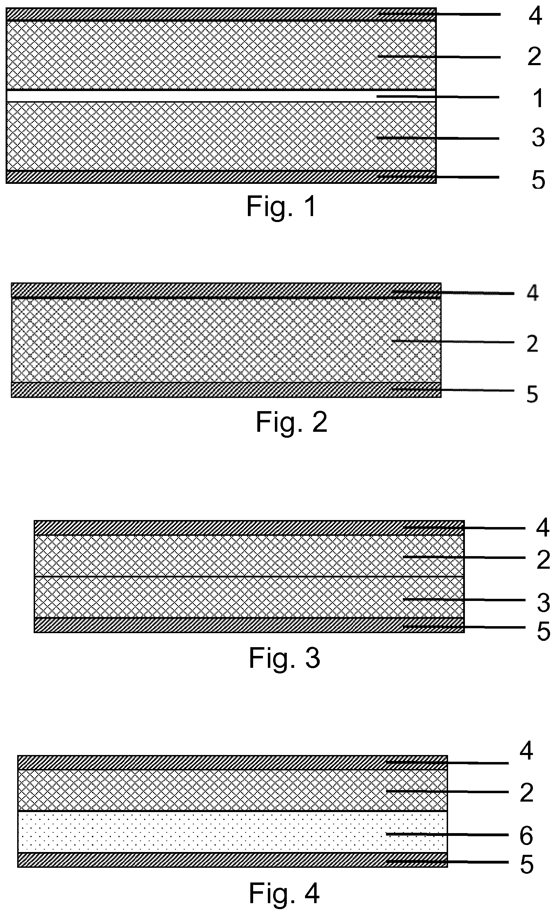

In Figur 1 ist der schematische Aufbau eines erfindungsgemäßen doppelseitigen trägerhaltigen Klebebands als Querschnitt dargestellt.

Das Klebeband umfasst einen Träger 1. Auf der Oberseite und auf der Unterseite des Trägers 1 sind zwei mit Mikroballons zumindest teilgeschäumte Selbstklebemasseschichten 2, 3 vorhanden. Die Selbstklebemasse-schichten 2, 3 sind ihrerseits jeweils mit einem zur Verwendung im erfindungsgemäßen Verfahren geeigneten Liner 4, 5 eingedeckt, wie beispielsweise einem beidseitig silikonisierten PET-Liner einer Dicke von 75 μm.

In Figur 2 ist ferner der schematische Aufbau eines erfindungsgemäßen Transfertapes als Querschnitt dargestellt.

Das Klebeband (Transfertape) umfasst eine mit Mikroballons zumindest teilgeschäumte Selbstklebemasseschicht 2. Die Selbstklebemasseschicht 2 ist beidseitig mit einem zur Verwendung im erfindungsgemäßen Verfahren geeigneten Liner 4, 5 eingedeckt, wie beispielsweise einem beidseitig silikonisierten PET-Liner einer Dicke von 75 μm.

In Figur 3 ist der schematische Aufbau eines weiteren erfindungsgemäßen Transfertapes als Querschnitt dargestellt.

Das Klebeband (Transfertape) umfasst zwei mit Mikroballons zumindest teilgeschäumte Selbstklebemasseschichten 2 und 3 mit vorzugsweise identischer chemischer Beschaffenheit, die übereinander angeordnet sind, d.h. in direktem Kontakt miteinander stehen. Die Selbstklebemasseschichten 2 und 3 sind auf der offenen Seite jeweils mit einem zur Verwendung im erfindungsgemäßen Verfahren geeigneten Liner 4, 5 eingedeckt, wie beispielsweise einem beidseitig silikonisierten PET-Liner einer Dicke von 75 μm.

In Figur 4 ist der schematische Aufbau eines weiteren erfindungsgemäßen Transfertapes als Querschnitt dargestellt.

Das Klebeband (Transfertape) umfasst eine mit Mikroballons zumindest teilgeschäumte Selbstklebemasseschicht 2 und eine nicht geschäumte Selbstklebemasseschicht 6, die übereinander angeordnet sind, d.h. in direktem Kontakt miteinander stehen. Die Selbstklebemasseschichten 2 und 6 sind auf der offenen Seite jeweils mit einem zur Verwendung im erfindungsgemäßen Verfahren geeigneten Liner 4, 5 eingedeckt, wie beispielsweise einem beidseitig silikonisierten PET-Liner einer Dicke von 75 μm.

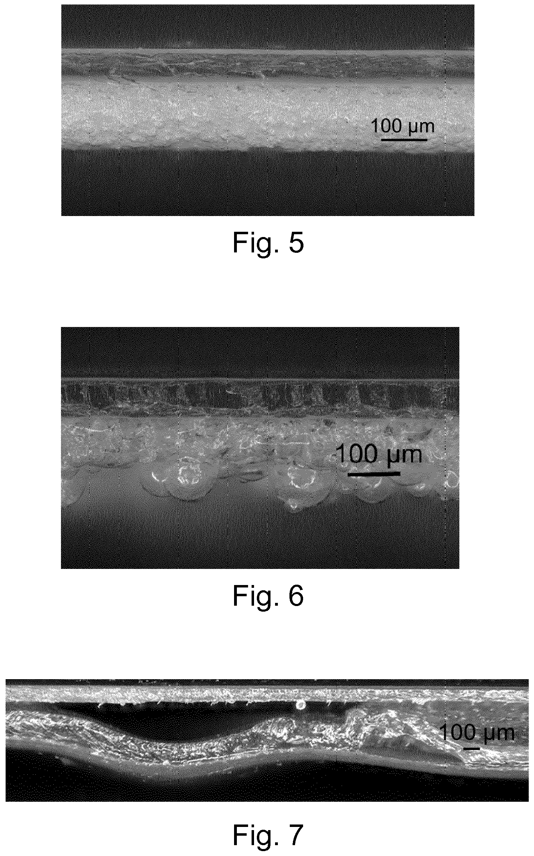

Figur 5 zeigt eine REM-Aufnahme (300-fache Vergrößerung) einer Kryobruch-kante der erfindungsgemäß zwischen zwei beidseitig silikonisierten PET-Linern einer Dicke von jeweils 75 μm geschäumten Selbstklebemassenschicht auf Polyacrylatbasis aus Beispiel 1. Die Oberfläche der Selbstklebemasseschicht ist glatt. Aus der Selbstklebemasseschicht ragen insbesondere keine geschäumten Mikroballons heraus. Die Mikroballons verblieben somit während der Schäumung in der Selbstklebemasseschicht, d.h. drückten sich nicht aus dieser heraus.

Figur 6 zeigt eine REM-Aufnahme (300-fache Vergrößerung) einer Kryobruchkante der zwischen zwei Linern in Form von Trennpapieren einer Dicke von jeweils 77 μm geschäumten Selbstklebemassenschicht auf Polyacrylatbasis aus Vergleichsbeispiel 4. Auf einer Seite hob das Trennpapier während der Schäumung im Trockenofen von der Selbstklebemasseschicht ab (dadurch nicht mehr in der Aufnahme zu sehen). Auf der dann offenen Seite der Selbstklebemasseschicht drückten sich die expandierenden Mikroballons daraufhin aus der Masse heraus. Es sind dementsprechend aus der Selbstklebemasseschicht herausragende geschäumte Mikroballons zu sehen, die die offene Seite der Selbstklebemasseschicht uneben machen.

Figur 7 zeigt eine REM-Aufnahme (50-fache Vergrößerung) einer Kryobruchkante der zwischen zwei HDPE-Linern einer Dicke von jeweils 100 μm geschäumten Selbstklebemassenschicht auf Polyacrylatbasis aus Vergleichsbeispiel 5. Die HPDE-Liner waren während der Schäumung der Selbstklebemasseschicht im Trockenofen nicht temperaturstabil. Einer der HDPE-Liner nahm eine Wellenform ein, d.h. verlor seine Planlage. Daraufhin löste sich die Selbstklebemasseschicht auf beiden Seiten jedenfalls teilweise vom jeweiligen Liner ab. Wie man der Aufnahme ferner entnehmen kann, ist die Selbstklebemasseschicht nach der Schäumung uneben und bisweilen sogar wellig.

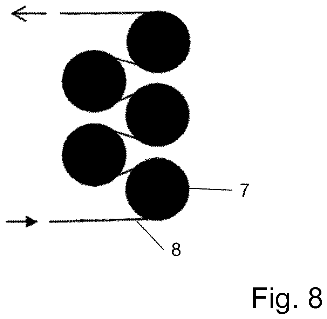

Figur 8 zeigt einen beispielhaften Bahnweg zum Schäumen durch Walzenkontakt. Es wird eine Abfolge aus fünf geheizten Walzen 7 eingesetzt. Der Verbund 8 aus schäumbarer Selbstklebemasseschicht, Liner und gegebenenfalls Träger und/oder weiterer Selbstklebemasseschicht wird dabei so über die Walzen 7 geführt, dass die Oberflächen des Verbunds 8 wechselseitig die Walzenoberflächen berühren.

Nachfolgend wird die Erfindung durch einige Beispiele näher erläutert. Anhand der nachfolgend beschriebenen Beispiele werden besonders vorteilhafte Ausführungen der Erfindung näher erläutert, ohne damit die Erfindung unnötig einschränken zu wollen.

## Beispiele

Im Folgenden werden beispielhafte Verfahren zur Herstellung einer mit Mikroballons geschäumten Selbstklebemasseschicht beschrieben, bei denen die Schäumung jeweils zwischen zwei Linern erfolgt.

Beispiel 1:

Im ersten Schritt wurde das zur Verwendung in der Selbstklebemasse vorgesehene Basispolymer P1, d.h. das Polyacrylat (Ac), über eine freie radikalische Polymerisation in Lösung hergestellt. Ein für radikalische Polymerisationen konventioneller Reaktor wurde dabei mit 60 kg 2-Ethylhexylacrylat, 33 kg n-Butylacrylat, 7 kg Acrylsäure und 66 kg Benzin/Aceton (70/30) befüllt. Nach 45minütiger Durchleitung von Stickstoffgas unter Rühren wurde der Reaktor auf 58 °C hochgeheizt und 50 g AIBN hinzugegeben. Anschließend wurde das äußere Heizbad auf 75 °C erwärmt und die Reaktion konstant bei dieser Außentemperatur durchgeführt. Nach 1 h wurden erneut 50 g AIBN zugegeben und nach 4 h wurde mit 20 kg Benzin/Aceton Gemisch verdünnt. Nach 5,5 sowie nach 7 h wurde jeweils mit 150 g Bis-(4-tert-butylcyclohexyl)-peroxydicarbonat nachinitiiert. Nach 22 h Reaktionszeit wurde die Polymerisation abgebrochen und auf Raumtemperatur (20 °C) abgekühlt. Das Polyacrylat hat ein mittleres Molekulargewicht von $M_W$ = 450.000 g/mol und eine Polydispersität PD ($M_W/M_n$) = 7,8.

Anschließend wurde die schäumbare Selbstklebemasse hergestellt. Hierzu wurden 100 Gew.-% des Basispolymers P1 durch die Zugabe von Benzin und Aceton (im Gewichtsverhältnis 1:1) auf einen Feststoffgehalt von 35 Gew.-% eingestellt. Im Anschluss wurden 2,5 Gew.-% unexpandierte Mikroballons Expancel 920 DU20 als Gemisch in Benzin/Aceton (Gewichtsverhältnis 1:1) bei Raumtemperatur (20 °C) unter Rühren zur Masse gegeben. Die Gewichtsanteile der Mikroballons beziehen sich in den Beispielen jeweils auf das Trockengewicht der eingesetzten Lösung, zu der sie gegeben wurden (d.h. das Trockengewicht der eingesetzten Lösung wird als 100% festgesetzt). Die Mischung wurde für 15 Minuten gerührt, um anschließend 0,075 Gew.-% des kovalenten Vernetzers Erysis GA 240 (N,N,N',N'-tetrakis(2,3-epoxypropyl)-m-xylen-a,a'-diamin) der Firma Emerald Performance Materials unter Rühren zuzufügen, bezogen auf das Gewicht des eingesetzten Basispolymers. Die Mischung wurde für weitere 15 Minuten gerührt.

Die erhaltene Mischung wurde dann mit einem Rührer kontinuierlich durchmischt, durch einen 50μm Filter gepumpt, mittels statischem Mischer nochmals durchmischt und schließlich auf den Streichtisch befördert, wo mittels einer Kommarakel bei 15 m/min Bahngeschwindigkeit auf einen 75 μm dicken PET-Liner (Beispiel 1), der jeweils beidseitig mit einem trennenden Silikon ausgerüstet war (Masseauftrag des Silikons: beidseitig 1g/m$^2$), in einer solchen Schichtdicke ausgestrichen wurde, dass sich nach dem anschließenden Abdampfen des Lösungsmittels bei 100 °C für 15 min im Trockenofen und somit Trocknen der Masseschicht ein Masseauftrag von 85 g/m$^2$ ergab.

Daraufhin wurde auf die freie Oberfläche der hergestellten und getrockneten Selbstklebemasseschicht ein zweiter identischer PET-Liner kaschiert und die Selbstklebemasseschicht anschließend für 30 s bei 163 °C zwischen den beiden Linern im Trockenofen geschäumt und dann bei Raumtemperatur (20 °C) abgekühlt.

Die Liner blieben während der Schäumung vollständig auf der jeweiligen Oberfläche der schäumbaren Selbstklebemasseschicht, auf der sie angeordnet waren, haften. Der Schrumpf der Liner während der Schäumung betrug sowohl in Längs-, als auch in Querrichtung 0%, d.h. weder in Quer-, noch in Längsrichtung war ein Schrumpf festzustellen. Ferner waren die Liner während der Schäumung gewichtsstabil, d.h. verloren kein Gewicht. Außerdem nahmen die Liner während der Schäumung durchgehend eine Planlage ein.

Wie die REM-Aufnahme aus Figur 5 zeigt, ist die Oberfläche der Selbstklebemasseschicht glatt. Aus der Selbstklebemasseschicht ragen insbesondere keine geschäumten Mikroballons heraus. Die Mikroballons verblieben somit während der Schäumung in der Selbstklebemasseschicht, d.h. drückten sich nicht aus dieser heraus. Die Oberflächenrauigkeit der geschäumten Selbstklebemasseschicht beträgt $R_a$ 2,5 $\mu$m.

Beispiel 2:

Das Verfahren zur Herstellung einer mit Mikroballons geschäumten Selbstklebemasseschicht entspricht Beispiel 1, wobei die beiden eingesetzten beidseitig silikonisierten PET-Liner eine Dicke von lediglich 50 $\mu$m aufwiesen.

Die Liner blieben während der Schäumung vollständig auf der jeweiligen Oberfläche der schäumbaren Selbstklebemasseschicht, auf der sie angeordnet waren, haften. Der Schrumpf der Liner während der Schäumung betrug sowohl in Längs-, als auch in Querrichtung 0%, d.h. weder in Quer-, noch in Längsrichtung war ein Schrumpf festzustellen. Ferner waren die Liner während der Schäumung gewichtsstabil, d.h. verloren kein Gewicht. Außerdem nahmen die Liner während der Schäumung durchgehend eine Planlage ein.

In REM-Aufnahmen ist eine glatte Oberfläche der Selbstklebemasseschicht zu sehen. Aus der Selbstklebemasseschicht ragen insbesondere keine geschäumten Mikroballons heraus. Die Mikroballons verblieben somit während der Schäumung in der Selbstklebemasseschicht, d.h. drückten sich nicht aus dieser heraus (nicht gezeigt). Die Oberflächenrauigkeit der geschäumten Selbstklebemasseschicht beträgt $R_a$ 1,8 $\mu$m.

Vergleichsbeispiel 3:

Das Verfahren zur Herstellung einer mit Mikroballons geschäumten Selbstklebemasseschicht entspricht Beispiel 1, wobei die beiden eingesetzten beidseitig silikonisierten PET-Liner eine Dicke von lediglich 12 $\mu$m aufwiesen.

Die Liner verloren während der Schäumung die Planlage. Der Schäumungsprozess führte zu einem Schrumpf der Liner von jeweils 2% in Längs- und Querrichtung. Die Liner blieben daher während der Schäumung nicht vollständig auf der jeweiligen Oberfläche der schäumbaren Selbstklebemasseschicht, auf der sie angeordnet waren, haften. Die Eignung eines Liners für das erfindungsgemäße Verfahren hängt somit nicht lediglich vom Linermaterial, sondern auch von der Linerdicke ab. An den Stellen, an denen die Liner sich abhebten, traten Mikroballons aus der Klebemasseoberfläche aus und die Klebemasseoberfläche war matt und rau.

Vergleichsbeispiel 4:

Das Verfahren zur Herstellung einer mit Mikroballons geschäumten Selbstklebemasseschicht entspricht Beispiel 1, wobei es sich bei den beiden eingesetzten Linern jeweils um ein Trennpapier (TP) einer Dicke von jeweils 77 $\mu$m handelte.

Die Liner waren während der Schäumung nicht gewichtsstabil, sondern verloren rund 2 Gew.-% durch Feuchtigkeitsverlust. Eines der Trennpapiere hob sich während der Schäumung im Trockenofen von der Selbstklebemasseschicht ab. Auf der dann offenen Seite der Selbstklebemasseschicht drückten sich die expandierenden Mikroballons daraufhin aus der Masse heraus. Es sind in einer REM-Aufnahme dementsprechend aus der Selbstklebemasseschicht herausragende geschäumte Mikroballons zu sehen, die die offene Seite der Selbstklebemasseschicht uneben machen (siehe Figur 6). Außerdem führte die Schäumung zu einem Schrumpf der Liner von 1% in Längsrichtung und 0% in Querrichtung.

Vergleichsbeispiel 5:

Das Verfahren zur Herstellung einer mit Mikroballons geschäumten Selbstklebemasseschicht entspricht Beispiel 1, wobei es sich bei den beiden eingesetzten Linern jeweils um einen HDPE-Liner einer Dicke von 100 $\mu$m handelte.

Während der Schäumung der Selbstklebemasseschicht schmolzen die Liner, bedingt durch die niedrige Schmelztemperatur von Polyethylen. Wie man der REM-Aufnahme aus Figur 7 entnehmen kann, nahm einer der HDPE-Liner dabei eine Wellenform ein, d.h. verlor seine Planlage (ferner schrumpfte der Liner um 74% in Längsrichtung und 0% in Querrichtung). Daraufhin löste sich die Selbstklebemasseschicht auf beiden Seiten jedenfalls teilweise vom jeweiligen Liner ab. Wie man der Aufnahme ferner entnehmen kann, ist die Selbstklebemasseschicht nach der Schäumung uneben und bisweilen sogar wellig.

Vergleichsbeispiel 6:

Das Verfahren zur Herstellung einer mit Mikroballons geschäumten Selbstklebemasseschicht entspricht Beispiel 1, wobei es sich bei den beiden eingesetzten Linern jeweils um beidseitig mit Polyethylen (PE) beschichtetes Papier (TP) handelte.

Während der Schäumung der Selbstklebemasseschicht schmolzen die Polyethylenschichten der Liner, bedingt durch die niedrige Schmelztemperatur von Polyethylen. Die Liner erscheinen daher nach der Schäumung mit dem bloßen Auge betrachtet blasig und matt. Einer der Liner nahm während der Schäumung eine Wellenform ein, d.h. verlor seine Planlage (ferner schrumpfte der Liner um 1% in Längsrichtung und 0% in Querrichtung). Daraufhin löste sich die Selbstklebemasseschicht auf beiden Seiten jedenfalls teilweise vom Liner ab. Die Selbstklebemasseschicht war nach der Schäumung uneben und bisweilen sogar wellig.

Beispiel 7 (nicht erfindunasaemäß):

Es wurde ein Haftklebestreifen auf Basis einer Styrolblockcopolymer (SBC)-Masse hergestellt.

Hierfür wurde zuerst eine 40 gew.-%ige Klebelösung in Benzin/Toluol/Aceton hergestellt von 48,0 Gew.-% Kraton D1102AS, 48,0 Gew.-% Piccolyte A115, 3,5 Gew.-% Wingtack 10 und 0,5 Gew.-% Alterungsschutzmittel Irganox 1010 (auch Klebelösung 1 genannt). Die Gewichtsanteile der gelösten Bestandteile beziehen sich dabei jeweils auf das Trockengewicht der resultierenden Lösung. Die genannten Bestandteile der Klebemasse sind wie folgt charakterisiert:

| | |
|---|---|
| Kraton D1102AS: | Styrol-Butadien-Styrol-Triblockcopolymer der Firma Kraton Polymers mit 17 Gew.-% Diblock, Blockpolystyrolgehalt: 30 Gew.-% |
| Piccolyte A115: | festes $\alpha$-Pinen-Klebharz mit einer Ring und Ball-Erweichungstemperatur von 115 °C |
| Wingtack 10: | Flüssiges Kohlenwasserstoffharz der Firma Cray Valley |
| Irganox1010: | Pentaerythritoltetrakis(3-(3,5-di-tert-butyl-4-hydroxyphenyl)propionat) der BASF SE |

Die Lösung wurde anschließend mit 3,3 Gew.-% unexpandierten Mikroballons Expancel 920 DU20 versetzt, wobei die Mikroballons als Anschlämmung in Benzin eingesetzt wurden. Die Gewichtsanteile der Mikroballons beziehen sich in den Beispielen jeweils auf das Trockengewicht der eingesetzten Lösung, zu der sie gegeben wurden (d.h. das Trockengewicht der eingesetzten Lösung wird als 100% festgesetzt). Die erhaltene Mischung wurde dann mit einem Streichbalken auf einen 75 $\mu$m PET-Liner wie in Beispiel 1 definiert, in einer solchen Schichtdicke ausgestrichen, dass sich nach dem anschließenden Abdampfen des Lösungsmittels bei 100 °C für 15 min und somit Trocknen der Masseschicht ein Masseauftrag von 75 g/m$^2$ ergab.

Daraufhin wurde auf die freie Oberfläche der hergestellten und getrockneten Klebmassenschicht ein zweiter solcher PET-Liner kaschiert, die Klebmassenschicht anschließend für 30 s bei 163 °C zwischen den beiden Linern im Ofen geschäumt und dann bei Raumtemperatur (20 °C) abgekühlt.

Die Liner blieben während der Schäumung vollständig auf der jeweiligen Oberfläche der schäumbaren Selbstklebemasseschicht, auf der sie angeordnet waren, haften. Der Schrumpf der Liner während der Schäumung betrug sowohl in Längs-, als auch in Querrichtung 0%, d.h. weder in Quer-, noch in Längsrichtung war ein Schrumpf festzustellen. Ferner waren die Liner während der Schäumung gewichtsstabil, d.h. verloren kein Gewicht. Außerdem nahmen die Liner während der Schäumung durchgehend eine Planlage ein.

Die Oberfläche der Selbstklebemasseschicht ist glatt. Aus der Selbstklebemasseschicht ragen insbesondere keine geschäumten Mikroballons heraus. Die Mikroballons verblieben somit während der Schäumung in der Selbstklebemasseschicht, d.h. drückten sich nicht aus dieser heraus. Die Oberflächenrauigkeit der geschäumten Selbstklebemasseschicht beträgt $R_a$ = 2,1 $\mu$m.

Beispiel 8:

Es wurde ein erfindungsgemäßer Haftklebestreifen auf Basis eines Polyacrylat (Ac)-Styrolblockcopolymer (SBC)-Blends hergestellt.

Hierzu wurde eine Mischung hergestellt umfassend 42,425 Gew.-% Basispolymer P1 wie vorstehend unter Beispiel 1 beschrieben, 37,5 Gew. % Harz Dertophene T sowie 20 Gew.-% Kraton D 1118. Bei Dertophene T handelt es sich um ein Terpenphenolharz (Erweichungspunkt 110 °C; $M_w$ = 500 bis 800 g/mol; PD = 1,50) von DRT resins. Bei Kraton 1118 handelt es sich um ein Styrol-Butadien-StyrolBlockcopolymer der Firma Kraton Polymers mit 78 Gew.-% 3-Block, 22 Gew.-% 2-Block, einem Blockpolystyrolgehalt von 33 Gew.-% sowie einem Molekulargewicht $M_w$ des 3-Blockanteils von 150.000 g/mol. Durch die Zugabe von Benzin wurde ein Feststoffgehalt von 38 Gew.-% eingestellt. Die Mischung aus Polymer und Harz wurde solange gerührt, bis sich das Harz sichtbar vollständig gelöst hat. Im Anschluss wurden 0,075 Gew. % des kovalenten Vernetzers Erysis GA 240 (N,N,N',N'-tetrakis(2,3-epoxypropyl)-m-xylen-a,a'-diamin) der Firma Emerald Performance Materials zugegeben. Die Gewichtsanteile der gelösten Bestandteile beziehen sich jeweils auf das Trockengewicht der resultierenden Lösung. Die Mischung wurde für 15 Minuten unter Zugabe von 0,8 Gew.-% unexpandierte Mikroballons Expancel 920 DU20 bei Raumtemperatur (20 °C) gerührt. Die erhaltene Mischung wurde dann mit einem Streichbalken auf einen 75 μm dicken PET-Liner wie in Beispiel 1 definiert, in einer solchen Schichtdicke ausgestrichen, dass sich nach dem anschließenden Abdampfen des Lösungsmittels bei 100 °C für 15 min und somit Trocknen der Masseschicht ein Masseauftrag von 130 g/m² ergab.

Daraufhin wurde auf die freie Oberfläche der hergestellten und getrockneten Klebmassenschicht ein zweiter solcher PET-Liner kaschiert, die Klebemassenschicht anschließend für 30 s bei 163 °C zwischen den beiden Linern im Ofen geschäumt und dann bei Raumtemperatur (20 °C) abgekühlt.

Die Liner blieben während der Schäumung vollständig auf der jeweiligen Oberfläche der schäumbaren Selbstklebemasseschicht, auf der sie angeordnet waren, haften. Der Schrumpf der Liner während der Schäumung betrug sowohl in Längs-, als auch in Querrichtung 0%, d.h. weder in Quer-, noch in Längsrichtung war ein Schrumpf festzustellen. Ferner waren die Liner während der Schäumung gewichtsstabil, d.h. verloren kein Gewicht. Außerdem nahmen die Liner während der Schäumung durchgehend eine Planlage ein.

Die Oberfläche der Selbstklebemasseschicht ist glatt. Aus der Selbstklebemasseschicht ragen insbesondere keine geschäumten Mikroballons heraus. Die Mikroballons verblieben somit während der Schäumung in der Selbstklebemasseschicht, d.h. drückten sich nicht aus dieser heraus. Die Oberflächenrauigkeit der geschäumten Selbstklebe-masseschicht beträgt $R_a$ = 2,9 μm.

Tabelle 1 zeigt verschiedene Eigenschaften der mit Mikroballons geschäumten Selbstklebemasseschichten aus den erfindungsgemäßen Beispielen und Verg leichsbeispielen .

| Beispiel | Linerart und -dicke | Basispolymer | Dicke* [μm] | Dichte* [kg/m³] | $R_a$* lgm1 | Klebkraft* [N/cm] | Dupont z* [J] |
|---|---|---|---|---|---|---|---|
| 1 | PET, 75 μm | Ac | 130 | 650 | 2,5 | 7 | 0,7 |
| 2 | PET, 50 μm | Ac | 130 | 650 | 1,8 | 7 | 0,7 |
| V3 | PET, 12 μm | Ac | 130 | 650 | 8 | 4 | 0,21 |
| V4 | TP, 77 μm | Ac | 130 | 650 | 11 | 4 | 0,15 |
| V5 | HDPE, 77 μm | Ac | 130 | 650 | nicht messbar, d.h. > 75μm | nicht messbar | nicht messbar |
| V6 | PE TP, 100 μm | Ac | 130 | 650 | nicht messbar, d.h. > 75μm | nicht messbar | nicht messbar |
| 7[a] | PET, 75 μm | SBC | 145 | 520 | 2,1 | 8 | 0,62 |
| 8 | PET, 75 μm | Ac/SBC | 150 | 880 | 2,9 | 11 | 0,8 |
| *bezieht sich auf die geschäumte Selbstklebemasseschicht. [a]nicht erfindungsgemäß. | | | | | | | |

Die geschäumten Selbstklebemasseschichten aus den erfindungsgemäßen Beispielen, bei deren Herstellung jeweils ein erfindungsgemäß geeigneter Liner eingesetzt wurde, sind glatt, sie weisen jeweils eine Oberflächenrauigkeit

$R_a$ von weniger als 3 $\mu$m auf. Wie die Dupont z-Werte zeigen, haben sie außerdem eine hohe Durchschlagzähigkeit. Auch besitzen sie sehr gute Klebkräfte. Wie die Beispiele 1 und 8 zeigen, gilt dies für unterschiedliche Basispolymere.

Die geschäumten Selbstklebemasseschichten aus den Vergleichsbeispielen weisen demgegenüber deutlich höhere Oberflächenrauigkeiten $R_a$, sowie deutlich geringere Durchschlagzähigkeiten und Klebkräfte auf Stahl auf (bzw. die Selbstklebemassen sind hinsichtlich der genannten physikalischen Parameter derart minderwertig, dass diese sich nicht messen lassen.) Die Vergleichsbeispiele zeigen, dass die erfindungsgemäße Eignung des Liners sowohl von der Beschaffenheit des Linermaterials, als auch von der Dicke des Liners beeinflusst wird.

*Prüfmethoden*

Alle Messungen wurden, sofern nichts anderes angegeben ist, bei 23 °C und 50 % rel. Luftfeuchtigkeit durchgeführt.

Die mechanischen und klebtechnischen Daten wurden wie folgt ermittelt:

*Zugfestigkeit, Reißfestigkeit (Reißkraft) und Reißdehnung (Messmethode R1)*

Die Reißdehnung, die Reißfestigkeit und die Zugfestigkeit, beispielsweise eines Folienträgers, wurden in Anlehnung an DIN EN ISO 527-3:2003-07 unter Verwendung eines Probestreifens, Probekörper Typ 2, mit einer Breite von 20 mm bei einer Separationsgeschwindigkeit von 100 mm pro Minute gemessen. Der Anfangsabstand der Einspannklemmen betrug 100 mm. Das Prüfklima betrug 23 °C und 50 % rel. Luftfeuchtigkeit.

*Ablösekraft*

Die Ablösekraft (Strippkraft bzw. Strippspannung) wurde unter Verwendung eines Haftklebestreifens mit den Abmessungen 50 mm Länge × 20 mm Breite mit einem am oberen Ende nicht haftklebrigem Anfasserbereich ermittelt. Der Haftklebstreifen wurde zwischen zwei deckungsgleich zueinander angeordneten Stahlplatten mit einer Abmessung von 50 mm × 30 mm mit einem Anpressdruck von jeweils 50 Newton verklebt. Die Stahlplatten haben an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen wurden für eine Dauer von 24 Stunden bei +40 °C gelagert. Nach der Rekonditionierung auf Raumtemperatur (20 °C) wurde der Haftklebstreifen mit einer Zuggeschwindigkeit von 1000 mm pro Minute parallel zur Verklebungsebene und kontaktfrei zu den Kantenbereichen der beiden Stahlplatten herausgelöst. Dabei wurde die erforderliche Ablösekraft in Newton (N) gemessen. Angegeben wird der Mittelwert der Strippspannungswerte (in N pro mm²), gemessen in dem Bereich, in welchem der Haftklebstreifen auf einer Verklebungslänge zwischen 10 mm und 40 mm von den Stahluntergründen abgelöst ist.

*Klebkraft*

Die Bestimmung der Klebkraft (gemäß AFERA 5001) wurde wie folgt durchgeführt. Als definierter Haftgrund wurde galvanisch verzinktes Stahlblech mit einer Stärke von 2 mm (Bezug von der Firma Rocholl GmbH) eingesetzt. Der zu untersuchende Haftklebstreifen wurde auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den gewählten Haftgrund aufgedrückt. Unmittelbar im Anschluss daran wurde der Haftklebstreifen in einem Winkel von 180° vom Haftgrund mit einem Zugprüfungsgerät (Firma Zwick) mit einer Geschwindigkeit v = 300 mm/min abgezogen und die hierfür bei Raumtemperatur (20 °C) benötigte Kraft gemessen. Der Messwert (in N/cm) ergibt sich als Mittelwert aus drei Einzelmessungen.

*Dicke*

Die Dicke z.B. eines Haftklebestreifens, einer Klebemasseschicht oder einer Trägerschicht lässt sich über handelsübliche Dickenmessgeräte (Taster-Prüfgeräte) mit Genauigkeiten von weniger als 1 $\mu$m Abweichung ermitteln. Die Dicke einer Klebemasseschicht wird dabei typischerweise durch Bestimmung der Dicke eines bezüglich seiner Länge und seiner Breite definierten Abschnitts einer solchen auf einen Träger oder Liner aufgetragenen Schicht, abzüglich der (bekannten oder separat ermittelbaren) Dicke eines Abschnitts gleicher Dimension des verwendeten Trägers bzw. Liners ermittelt. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen. In der vorliegenden Anmeldung wird zur Dickenmessung das Präzisions-Dickenmessgerät Mod. 2000 F eingesetzt, das einen kreisrunden Taster mit einem Durchmesser von 10 mm (plan) aufweist. Die Messkraft beträgt 4 N. Der Wert wird 1 s nach Belastung abgelesen.

*Dichte*

Die Dichte einer Klebemasseschicht wird ermittelt durch Quotientenbildung aus Masseauftrag und Dicke der auf einen Träger oder Liner aufgetragenen Klebemasseschicht.

Der Masseauftrag einer Klebemasseschicht kann durch Bestimmung der Masse eines bezüglich seiner Länge und seiner Breite definierten Abschnitts einer solchen auf einen Träger oder Liner aufgetragenen Schicht, abzüglich der (bekannten oder separat ermittelbaren) Masse eines Abschnitts gleicher Dimensionen des verwendeten Trägers bzw. Liners ermittelt werden.

Die Dicke einer Klebemasseschicht kann durch Bestimmung der Dicke eines bezüglich seiner Länge und seiner Breite definierten Abschnitts einer solchen auf einen Träger oder Liner aufgetragenen Schicht, abzüglich der (bekannten oder separat ermittelbaren) Dicke eines Abschnitts gleicher Dimensionen des verwendeten Trägers bzw. Liners ermittelt werden. Die Dicke der Schicht lässt sich über handelsübliche Dickenmessgeräte (Taster-Prüfgeräte) mit Genauigkeiten von weniger als 1 $\mu$m Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen. In der vorliegenden Anmeldung wird zur Dickenmessung das Präzisions-Dickenmessgerät Mod. 2000 F eingesetzt, das einen kreisrunden Taster mit einem Durchmesser von 10 mm (plan) aufweist. Die Messkraft beträgt 4 N. Der Wert wird 1 s nach Belastung abgelesen.

*DuPont-Test in der z-Richtung (Durchschlagzähigkeit)*

Aus dem zu untersuchenden Klebeband (Haftklebstreifen) wurde eine quadratische, rahmenförmige Probe ausgeschnitten (Außenmaße 33 mm x 33 mm; Stegbreite 2,0 mm; Innenmaße (Fensterausschnitt) 29 mm x 29 mm). Diese Probe wurde auf einen PC-Rahmen (Außenmaße 45 mm x 45 mm; Stegbreite 10 mm; Innenmaße (Fensterausschnitt) 25 mm x 25 mm; Dicke 3 mm) geklebt. Auf der anderen Seite des Klebebands wurde ein PC-Fenster von 35 mm x 35 mm geklebt. Die Verklebung von PC-Rahmen, Klebebandrahmen und PC-Fenster erfolgte derart, dass die geometrischen Zentren und die Diagonalen jeweils übereinanderlagen (Eck-auf-Eck). Die Verklebungsfläche betrug 248 mm². Die Verklebung wurde für 5 s mit 248 N gepresst und für 24 Stunden konditioniert bei 23 °C / 50 % relativer Feuchte gelagert.

Unmittelbar nach der Lagerung wurde der Klebeverbund aus PC-Rahmen, Klebeband und PC-Fenster mit den überstehenden Kanten des PC-Rahmens derart in eine Probenhalterung gespannt, dass der Verbund waagerecht ausgerichtet war und das PC-Fenster sich unterhalb des Rahmens befand. Die Probenhalterung wurde anschließend in die vorgesehene Aufnahme des "DuPont Impact Tester" zentrisch eingesetzt. Der 190 g schwere Schlagkopf wurde so eingesetzt, dass die kreisförmige Aufschlaggeometrie mit dem Durchmesser von 20mm auf die Fensterseite des PC Fensters zentrisch und bündig auflag.

Auf den so angeordneten Verbund aus Probenhalterung, Probe und Schlagkopf wurde senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wurde in 5 cm Schritten so lange erhöht bis die eingebrachte Stoßenergie die Probe durch die Schlagbelastung zerstört und das PC Fenster sich vom PC Rahmen löste.

Um Versuche mit unterschiedlichen Proben vergleichen zu können, wurde die Energie wie folgt berechnet:

$$E \, [J] = \text{Höhe } [m] * \text{Gewicht } [kg] * 9{,}81 \ m/s^2$$

Es wurden fünf Proben pro Produkt getestet und der Energiemittelwert als Kennzahl für die Durchschlagzähigkeit angegeben.

*Durchmesser*

Die Bestimmung des mittleren Durchmessers der von den Mikroballons gebildeten Hohlräume in einer Selbstklebemasseschicht erfolgt anhand von Kryobruchkanten des Haftklebstreifens im Rasterelektronenmikroskop (REM) bei 500-facher Vergrößerung. Es wird von den auf REM-Aufnahmen von 5 verschiedenen Kryobruchkanten des Haftklebestreifens zu sehenden Mikroballons der zu untersuchenden Selbstklebemasseschicht jeweils grafisch der Durchmesser ermittelt, wobei das arithmetische Mittel aller in den 5 REM-Aufnahmen ermittelten Durchmesser den mittleren Durchmesser der von den Mikroballons gebildeten Hohlräume der Selbstklebemasseschicht im Sinne der vorliegenden Anmeldung darstellt. Die Durchmesser der auf den Aufnahmen zu sehenden Mikroballons werden graphisch derart ermittelt, dass aus den REM-Aufnahmen für jeden einzelnen Mikroballon der zu untersuchenden Selbstklebemasseschicht dessen maximale Ausdehnung in beliebiger (zweidimensionaler) Richtung entnommen wird und als dessen Durchmesser angesehen wird.

*Statische Glasübergangstemperatur $T_g$*

Glasübergangspunkte - synonym als Glasübergangstemperaturen bezeichnet - werden angegeben als Ergebnis von Messungen mittels Dynamischer Differenzkalorimetrie DDK (englisch Dynamic Scanning Calorimetry; DSC) gemäß der DIN 53765:1994-03, insbesondere Abschnitte 7.1 und 8.1, jedoch mit einheitlichen Heiz- und Kühlraten von 10 K/min in allen Heiz- und Kühlschritten (vergleiche DIN 53765:1994-03; Abschnitt 7.1; Anmerkung 1). Die Probeneinwaage beträgt 20 mg.

*DACP*

In ein trockenes Probenglas werden 5,0 g Testsubstanz (das zu untersuchende Klebharzmuster) eingewogen und mit 5,0 g Xylol (Isomerengemisch, CAS [1330-20-7], $\geq$ 98,5%, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99%, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

*MMAP*

In ein trockenes Probenglas werden 5,0 g Testsubstanz (das zu untersuchende Klebharzmuster) eingewogen und mit 10 mL trockenem Anilin (CAS [62-53-3], $\geq$ 99,5 %, Sigma-Aldrich #51788 oder vergleichbar) und 5 mL trockenem Methylcyclohexan (CAS [108-87-2], $\geq$ 99 %, Sigma-Aldrich #300306 oder vergleichbar) versetzt. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

*Erweichungstemperatur*

Die Erweichungstemperatur, z.B. von Klebharzen, Polymeren oder Polymerblöcken, wird nach der einschlägigen Methodik durchgeführt, die als Ring & Ball bekannt ist und nach ASTM E28 - 14 standardisiert ist.

*Gelpermeationschromatographie (GPC)*

$M_n$, $M_w$, PD: die Angaben des Zahlenmittels der Molmasse $M_n$, des gewichtsmittleren Molekulargewichtes $M_w$ und der Polydispersität PD beziehen sich auf die Bestimmung per
Gelpermeationschromatographie. Die Bestimmung erfolgt an 100 $\mu$L klarfiltrierter Probe (Probenkonzentration 1 g/L). Als Eluent wird Tetrahydrofuran mit 0,1 Vol.-% Trifluoressigsäure eingesetzt. Die Messung erfolgt bei 25 °C. Als Vorsäule wird eine Säule
Typ PSS-SDV, 5 $\mu$, $10^3$ Å, ID 8,0 mm x 50 mm verwendet. Zur Auftrennung werden die Säulen des Typs PSS-SDV, 5 $\mu$, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung) beziehungsweise bei (Synthese-)Kautschuken gegen Polystyrol.

*Rückstellvermögen beziehungsweise Elastizität*

Zur Messung des Rückstellvermögens wurden die Folienträger um 100 % gedehnt, in dieser Dehnung für 30 s gehalten und dann entspannt. Nach einer Wartezeit von 1 min wurde erneut die Länge gemessen.

Das Rückstellvermögen berechnet sich nun wie folgt:

$$RV = ((L_{100} - L_{end}) / L_0)*100$$

mit RV = Rückstellvermögen in %

$L_{100}$ : Länge des Folienträgers nach der Dehnung um 100 %

$L_0$ : Länge des Folienträgers vor der Dehnung

$L_{end}$ : Länge des Folienträgers nach der Relaxation von 1 min.

Das Rückstellvermögen entspricht dabei der Elastizität.

*Elastizitätsmodul*

Der Elastizitätsmodul gibt den mechanischen Widerstand an, den ein Werkstoff einer elastischen Verformung entgegensetzt. Er wird bestimmt als das Verhältnis der erforderlichen Spannung $\sigma$ zur erzielten Dehnung $\varepsilon$, wobei $\varepsilon$ der Quotient aus der Längenänderung $\Delta L$ und der Länge $L_0$ im Hookeschen Verformungsregime des Probekörpers ist. Die Definition des Elastizitätsmoduls ist beispielsweise im Taschenbuch der Physik erläutert (H. Stöcker (Hrsg.), Taschenbuch der Physik, 2. Aufl., 1994, Verlag Harri Deutsch, Frankfurt, S. 102 - 110).

Zur Bestimmung des Elastizitätsmoduls einer Folie wurde das Zugdehnungsverhalten an einem Prüfling vom Typ 2 (rechteckiger 150 mm langer und 15 mm breiter Folien-Prüfstreifen) nach DIN EN ISO 527-3:2003-07 mit einer Prüfgeschwindigkeit von 300 mm/min, einer Einspannlänge von 100 mm und einer Vorkraft von 0,3 N/cm ermittelt, wobei der Prüfstreifen zur Ermittlung der Daten mit scharfen Klingen zugeschnitten wurde. Zum Einsatz kam eine Zugprüfmaschine der Fa. Zwick (Modell Z010). Das Zugdehnungsverhalten wurde in Maschinenrichtung (MD) gemessen. Zum Einsatz kam ein 1000 N (Zwick Roell Typ Kap-Z 066080.03.00) bzw. 100 N (Zwick Roell Typ Kap-Z 066110.03.00) Kraftmessdose. Der Elastizitätsmodul wurde aus den Messkurven grafisch durch Bestimmung der Steigung des für das Hookesche-Verhalten charakteristischen Anfangsbereichs der Kurve ermittelt und in GPa angegeben.

*Oberflächenrauigkeit $R_a$*

Die Oberflächenrauigkeit $R_a$ wurde mittels Lasertriangulation bestimmt.

Das verwendete PRIMOS System besteht aus einer Beleuchtungseinheit und einer Aufnahmeeinheit. Die Beleuchtungseinheit projiziert mit Hilfe eines digitalen Mikro-Spiegel-Projektors Linien auf die Oberfläche. Diese projizierten, parallelen Linien werden durch die Oberflächenstruktur abgelenkt beziehungsweise moduliert. Für die Registrierung der modulierten Linien wird eine, in einem bestimmten Winkel, dem so genannten Triangulationswinkel, angeordnete CCD-Kamera eingesetzt.

Messfeldgröße: $14,5 \times 23,4 \ mm^2$

Profillänge: 20,0 mm

Flächenrauheit: 1,0 mm vom Rand entfernt (Xm = 21,4 mm; Ym = 12,5 mm)

Filterung: Polynomfilter 3. Ordnung

Die Oberflächenrauigkeit $R_a$ stellt die durchschnittliche Höhe der Rauheit dar, insbesondere die durchschnittliche Absolutentfernung von der Mittellinie (Regressionslinie) des Rauheitsprofils innerhalb des Auswertungsbereichs. Anders ausgedrückt ist $R_a$ die arithmetische Mittenrauigkeit, d.h. der arithmetische Mittelwert aller Profilwerte des Rauheitsprofils.

Zu beziehen sind entsprechende Messgeräte unter anderem bei der GFMesstechnik GmbH in Teltow.

*Schrumpf*

Zur Ermittlung des Schrumpfs eines Liners unter den Bedingungen, wie sie bei der Schäumung einer Selbstklebemasseschicht gemäß dem erfindungsgemäßen Verfahren vorliegen, werden Prüfstreifen des Liners bei der im Verfahren eingesetzten Schäumungstemperatur und -dauer gelagert. Als Muster wird dabei typischerweise ein Lappen- oder Rollenmuster des Liners eingesetzt. Nach Entfernung der ersten drei Wicklungen werden von der zu prüfenden Rolle Prüfstreifen in Originalbreite und mit einer Länge von je 15 cm entnommen. Die Prüfstreifen werden dann freihängend (Halterung: Büroklammer) in den vorgewärmten Umluftschrank gebracht, für die vorgesehene Dauer (Schäumungsdauer) der vorgegebenen Prüftemperatur (Schäumungstemperatur) ausgesetzt und anschließend abgekühlt. Vor und nach der Lagerung werden deren Abmessungen in Längs- und Querrichtung bestimmt. Zur Ermittlung der Abmessungen wird jeweils ein Stahllineal (0,5 mm Teilung) eingesetzt. Der Schrumpf (in Längs- und Querrichtung) wird in % bezogen auf die Ausgangsmaße der Prüfstreifen berechnet. Es wird sowohl in Längs-, als auch in Querrichtung der Mittelwert der Einzelergebnisse aus der Messung von drei Prüfstreifen berechnet.

*Gewichtsverlust*

Zur Ermittlung des Gewichtsverlusts eines Liners unter den Bedingungen, wie sie bei der Schäumung einer Selbstklebemasseschicht gemäß dem erfindungsgemäßen Verfahren vorliegen, werden Prüfstreifen des Liners bei der im Verfahren eingesetzten Schäumungstemperatur und -dauer gelagert und anschließend abgekühlt. Vor und nach der Lagerung wird das Gewicht des Prüfstreifens bestimmt. Der Gewichtsverlust wird in % bezogen auf das Ausgangsgewicht berechnet. Es wird der Mittelwert der Einzelergebnisse aus drei Messungen verschiedener Prüfstreifen verwendet.

**Patentansprüche**

1. Verfahren zur Herstellung einer mit Mikroballons zumindest teilgeschäumten Selbstklebemasseschicht einer Oberflächenrauigkeit $R_a$, wie im Prüfmethodenteil bestimmt, von weniger als 3 $\mu$m, bei dem eine schäumbare Selbstklebemasseschicht enthaltend expandierbare Mikroballons, die zwischen

   (i) zwei Linern,
   (ii) einem Liner und einem Träger, oder
   (iii) einem Liner und einer weiteren Selbstklebemasseschicht, die (a) nicht schäumbar ist oder (b) schäumbar ist, wobei sie typischerweise expandierbare Mikroballons enthält,

   angeordnet ist, durch geeigneten Energieeintrag bei einer zur Schäumung geeigneten Temperatur für einen solchen Zeitraum wärmebehandelt wird, dass nach dem anschließenden Abkühlen der Schicht der gewünschte Schäumungsgrad erreicht wird,
   **dadurch gekennzeichnet, dass**
   die schäumbare Selbstklebemasseschicht basiert auf

   (i) einer Acrylatmasse oder
   (ii) einem Blend von Acrylat und Synthesekautschuk wie zum Beispiel Vinylaromatenblockcopolymer, wobei bezogen auf die Gesamtheit von 100 Gew.-% an Acrylatkomponente und Synthesekautschuckkomponente die Acrylatkomponente in einem Anteil von 60 Gew.-% bis 90 Gew.-% und die Synthesekautschukkomponente in einem Anteil von 10 Gew.-% bis 40 Gew.-% vorliegt,

   die beiden Liner oder der Liner während der Schäumung vollständig auf der jeweiligen Oberfläche der schäumbaren Selbstklebemasseschicht, auf der sie angeordnet sind, haften bleiben,
   wobei die beiden Liner unabhängig voneinander oder der Liner während der Schäumung gewichtsstabil sind, und insbesondere weniger als 2 %, beispielsweise weniger als 1 % Gewicht verlieren, beispielsweise in Form von Wasser, wobei der Schrumpf der beiden Liner unabhängig voneinander oder des Liners während der Schäumung sowohl in Quer-, als auch in Längsrichtung weniger als 2%, bevorzugt weniger als 1%, und noch bevorzugter weniger als 0,5% beträgt und insbesondere weder in Quer-, noch in Längsrichtung ein Schrumpf der Liner oder des Liners während der Schäumung festzustellen ist, und
   wobei die beiden Liner unabhängig voneinander oder der Liner Polyester-Liner sind, die zumindest einseitig antiadhäsiv beschichtet sind, wobei die beiden Liner oder der Liner eine Dicke von 50 bis 75 $\mu$m aufweisen.

2. Verfahren nach Anspruch 1,
   **dadurch gekennzeichnet, dass**
   die schäumbare Selbstklebemasseschicht zwischen (i) zwei Linern, (ii) einem Liner und einem Träger, oder (iii) einem Liner und einer weiteren Selbstklebemasseschicht angeordnet wird, indem eine Selbstklebemasse enthaltend expandierbare Mikroballons aus einer Lösung auf einen Liner oder Träger aufgebracht und unterhalb der Schäumungstemperatur getrocknet wird, und auf die dem Liner oder Träger gegenüberliegende Oberfläche der getrockneten Selbstklebemasseschicht ein Liner, ein Träger oder eine, typischerweise auf einen Liner oder Träger aufgebrachte, weitere Selbstklebemasseschicht kaschiert wird.

3. Verfahren nach Anspruch 1,
   **dadurch gekennzeichnet, dass**
   die schäumbare Selbstklebemasseschicht zwischen (i) zwei Linern, (ii) einem Liner und einem Träger, oder (iii) einem Liner und einer weiteren Selbstklebemasseschicht angeordnet wird, indem (i) die beiden Liner,(ii) der Liner und der Träger, oder (iii) der Liner und die, typischerweise auf einen Liner oder Träger aufgebrachte, weitere Selbstklebemasseschicht auf die schäumbare Selbstklebemasseschicht kaschiert werden.

4. Verfahren nach einem der vorhergehenden Ansprüche,
   **dadurch gekennzeichnet, dass**
   die Liner oder der Liner während der Schäumung durchgehend eine Planlage einnehmen.

5. Verfahren nach einem der vorhergehenden Ansprüche,
**dadurch gekennzeichnet, dass**
die schäumbare Selbstklebemassenschicht vollgeschäumt wird.

6. Verfahren nach einem der vorhergehenden Ansprüche,
**dadurch gekennzeichnet, dass**
die zur Schäumung notwendige Energie durch Konvektion, Strahlung wie IR-oder UV-Strahlung, oder durch Wärmeleitung auf den Verbund aus schäumbarer Selbstklebemasseschicht, Liner und gegebenenfalls Träger und/oder weiterer Selbstklebemasseschicht übertragen wird.

7. Verfahren nach Anspruch 6,
**dadurch gekennzeichnet, dass**
die zur Schäumung notwendige Energie durch Wärmeleitung gleichmäßig über die Bahnbreite auf den Verbund übertragen wird, vorzugsweise durch eine oder mehrere geheizte Walzen, wobei insbesondere eine Abfolge aus mindestens zwei geheizten Walzen eingesetzt wird, wobei der Verbund so über die mindestens zwei Walzen geführt wird, dass die Oberflächen des Verbunds wechselseitig die Walzenoberflächen berühren.

8. Verfahren nach Anspruch 6,
**dadurch gekennzeichnet, dass**
der Verbund in einem Trockenkanal geschäumt wird.

9. Verfahren nach Anspruch 7 oder 8,
**dadurch gekennzeichnet, dass**
die Temperaturdifferenz des Verbunds über die Bahnbreite höchstens 5K und insbesondere höchstens 2K beträgt.

10. Verfahren nach einem der vorhergehenden Ansprüche,
**dadurch gekennzeichnet, dass**
die beiden Liner unabhängig voneinander oder der Liner PET-Liner sind, die zumindest einseitig, vorzugsweise beidseitig antiadhäsiv beschichtet, wie zum Beispiel silikonisiert, sind.

11. Verfahren nach einem der vorhergehenden Ansprüche,
**dadurch gekennzeichnet, dass**
der Träger ein dehnbarer Folienträger ist, vorzugsweise aus Polyolefin, Polyurethan oder Kautschuk wie Synthesekautschuk.

12. Verfahren nach einem der Ansprüche 1 bis 10,
**dadurch gekennzeichnet, dass**
der Träger ein nichtdehnbarer Folienträger ist, vorzugsweise aus Polyester, Polyamid (PA), Polyimid (PI) oder mono- oder biaxial verstrecktem Polypropylen (PP), insbesondere aus Polyester wie zum Beispiel PET.

13. Verfahren nach einem der vorhergehenden Ansprüche,
**dadurch gekennzeichnet, dass**
der Verbund aus schäumbarer Selbstklebemasseschicht, Liner und gegebenenfalls Träger und/oder weiterer Selbstklebemasseschicht ein Transfertape, ein einseitiges Klebeband oder ein doppelseitiges trägerhaltiges Klebeband ist.

14. Verfahren nach einem der vorhergehenden Ansprüche,
**dadurch gekennzeichnet, dass**
die zumindest teilgeschäumte Selbstklebemasseschicht eine Oberflächenrauigkeit $R_a$, wie jeweils im Prüfmethodenteil bestimmt, von weniger als 2 $\mu$m, und insbesondere von weniger als 1 $\mu$m aufweist.

15. Klebeband, das mindestens eine mit Mikroballons zumindest teilgeschäumte Selbstklebemasseschicht umfasst, die nach einem Verfahren gemäß einem der Ansprüche 1 bis 14 erhältlich ist.

16. Verwendung eines Klebebands nach Anspruch 15 zur Verklebung von Bauteilen wie insbesondere Akkus und elektronischen Geräten wie insbesondere Mobilgeräten, wie zum Beispiel Handys.

**Claims**

1. Method for producing a layer of self-adhesive composition at least partially foamed with microballoons and having a surface roughness $R_a$, as determined in the Test Methods section, of less than 3 $\mu$m, wherein a foamable layer of self-adhesive composition comprising expandable microballoons and disposed between

   (i) two liners,
   (ii) a liner and a carrier, or
   (iii) a liner and a further layer of self-adhesive composition which (a) is not foamable or (b) is foamable and typically comprises expandable microballoons,

   is heat-treated by suitable energy input at a temperature suitable for foaming for a period such that after the subsequent cooling of the layer the desired degree of foaming is attained, **characterized in that** the foamable layer of self-adhesive composition is based on

   (i) an acrylate composition or
   (ii) a blend of acrylate and synthetic rubber such as, for example, vinylaromatic block copolymer, where, based on the entirety of 100 wt% of acrylate component and synthetic rubber component, the acrylate component is present in a fraction of 60 wt% to 90 wt% and the synthetic rubber component in a fraction of 10 wt% to 40 wt%,

   the two liners or the liner during the foaming remain or remains adhering completely on the respective surface of the foamable layer of self-adhesive composition on which they or it are or is disposed, where the two liners independently of one another or the liner during foaming are or is weight-stable, and more particularly lose or loses less than 2%, for example less than 1%, in weight, in the form of water, for example,
   where the shrinkage of the two liners independently of one another or of the liner during foaming both in transverse direction and in longitudinal direction is less than 2%, preferably less than 1%, and more preferably less than 0.5%, and more particularly no shrinkage of the liners or liner during foaming can be ascertained either in transverse direction or in longitudinal direction, and
   where the two liners independently of one another or the liner are or is (a) polyester liner(s) which is or are coated antiadhesively at least on one side, where the two liners or the liner have or has a thickness of 50 to 75 $\mu$m.

2. Method according to Claim 1,
   **characterized in that**
   the foamable layer of self-adhesive composition is disposed between (i) two liners, (ii) a liner and a carrier, or (iii) a liner and a further layer of self-adhesive composition, by application of a self-adhesive composition comprising expandable microballoons from a solution to a liner or carrier and drying thereof below the foaming temperature, and a liner, a carrier or a further layer of self-adhesive composition, typically applied to a liner or carrier, is laminated onto that surface of the dried layer of self-adhesive composition that is opposite the liner or carrier.

3. Method according to Claim 1,
   **characterized in that**
   the foamable layer of self-adhesive composition is disposed between (i) two liners, (ii) a liner and a carrier, or (iii) a liner and a further layer of self-adhesive composition, by (i) the two liners, (ii) the liner and the carrier, or (iii) the liner and the further layer of self-adhesive composition, typically applied to a liner or carrier, being laminated onto the foamable layer of self-adhesive composition.

4. Method according to any of the preceding claims,
   **characterized in that**
   the liners or the liner during foaming consistently adopt or adopts a flat lie.

5. Method according to any of the preceding claims,
   **characterized in that**
   the foamable layer of self-adhesive composition is fully foamed.

6. Method according to any of the preceding claims,
   **characterized in that**
   the energy needed for foaming is transferred by convection, radiation such as IR or UV radiation, or by heat conduction to the assembly composed of foamable layer of self-adhesive composition, liner and optionally carrier and/or further layer of self-adhesive composition.

7. Method according to Claim 6,
   **characterized in that**
   the energy needed for foaming is transferred to the assembly uniformly by heat conduction over the web width, preferably by one or more heated rollers, using more particularly a sequence of at least two heated rollers, with the assembly being guided over the at least two rollers in such a way that the surfaces of the composite make reciprocal contact with the roller surfaces.

8. Method according to Claim 6,
   **characterized in that**
   the assembly is foamed in a drying tunnel.

9. Method according to Claim 7 or 8,
   **characterized in that**
   the temperature difference of the assembly over the web width is at most 5 K and more particularly at most 2 K.

10. Method according to any of the preceding claims,
    **characterized in that**
    the two liners independently of one another or the liner are or is (a) PET liner (s) which is or are coated antiadhesively, such as for example siliconized, at least on one side, preferably on both sides.

11. Method according to any of the preceding claims,
    **characterized in that**
    the carrier is a stretchable film carrier, preferably of polyolefin, polyurethane or rubber such as synthetic rubber.

12. Method according to any of Claims 1 to 10,
    **characterized in that**
    the carrier is a non-stretchable film carrier, preferably of polyester, polyamide (PA), polyimide (PI) or monoaxially or biaxially oriented polypropylene (PP), more particularly of polyester such as PET, for example.

13. Method according to any of the preceding claims,
    **characterized in that**
    the assembly made up of foamable layer of self-adhesive composition, liner and optionally carrier and/or further layer of self-adhesive composition is a transfer tape, a single-sided adhesive tape or a double-sided, carrier-containing adhesive tape.

14. Method according to any of the preceding claims,
    **characterized in that**
    the at least partially foamed layer of self-adhesive composition has a surface roughness $R_a$, as determined in each case in the Test Methods section, of less than 2 $\mu$m, and more particularly of less than 1 $\mu$m.

15. Adhesive tape which comprises at least one layer of self-adhesive composition at least partially foamed with microballoons and obtainable by a method according to any of Claims 1 to 14.

16. Use of an adhesive tape according to Claim 15 for bonding components such as, in particular, rechargeable batteries and electronic devices such as, in particular, mobile devices, such as mobile phones, for example.

**Revendications**

1. Procédé de production d'une couche de matière auto-adhésive, au moins partiellement expansée, pourvue de microballons, dont la rugosité de surface $R_a$, telle que déterminée dans la partie méthode d'essai, est inférieure à 3 $\mu$m, procédé dans lequel une couche de matière auto-adhésive moussante, qui contient des microballons expansibles et qui est disposée entre

   (i) deux feuilles,
   (ii) une feuille et un support, ou

(iii) une feuille et une autre couche de matière auto-adhésive qui (a) est non-moussante ou (b) est moussante, ladite autre couche contenant typiquement des microballons expansibles,

est traitée thermiquement par un apport d'énergie approprié à une température appropriée au moussage pendant un intervalle de temps tel que, après le refroidissement ultérieur de la couche, le degré de moussage souhaité est atteint,
**caractérisé en ce que**
la couche auto-adhésive expansible est à base

(i) d'une matière acrylate ou

(ii) d'un mélange d'acrylate et de caoutchouc synthétique tel qu'un copolymère à blocs vinylaromatique, le composant acrylate étant présent dans une proportion de 60 % en poids à 90 % en poids et le composant caoutchouc synthétique étant présent dans une proportion de 10 % en poids à 40 % en poids sur la base du total de 100 % en poids de composant acrylate et de composant caoutchouc synthétique,

les deux feuilles ou la feuille reste(nt) entièrement collée(s) lors du moussage sur la surface respective de la couche auto-adhésive expansible sur laquelle elle(s) est/sont disposée(s),
les deux feuilles, indépendamment l'une de l'autre, ou la feuille étant stable(s) en poids lors du moussage, et notamment perdant moins de 2 %, par exemple moins de 1 % du poids, par exemple sous forme d'eau,
le retrait des deux feuilles, indépendamment l'une de l'autre, ou de la feuille lors du moussage, aussi bien dans la direction transversale que dans la direction longitudinale, étant inférieur à 2 %, de préférence inférieur à 1 %, et encore plus préférablement inférieur à 0,5 % et en particulier un retrait des feuilles ou de la feuille ne pouvant être déterminé pendant le moussage ni dans la direction transversale ni dans la direction longitudinale, et
les deux feuilles, indépendamment l'une de l'autre ou la feuille étant des/une feuille(s) en polyester qui comporte(nt) un revêtement antiadhésif sur au moins une face, les deux feuilles ou la feuille ayant une épaisseur de 50 à 75 μm.

2. Procédé selon la revendication 1,
**caractérisé en ce que**
la couche de matière auto-adhésive moussante est disposée entre (i) deux feuilles, (ii) une feuille et un support, ou (iii) une feuille et une autre couche de matière auto-adhésive par application d'une matière auto-adhésive contenant des microballons expansibles à partir d'une solution sur une feuille ou un support et par séchage au-dessous de la température de moussage, et par contre-collage d'une feuille, d'un support ou d'une autre couche de matière auto-adhésive, typiquement appliquée sur une feuille ou un support, sur la surface de la couche matière auto-adhésive séchée qui est opposée à la feuille ou au support.

3. Procédé selon la revendication 1,
**caractérisé en ce que**
la couche de matière auto-adhésive moussante est disposée entre (i) deux feuilles, (ii) une feuille et un support, ou (iii) une feuille et une autre couche de matière auto-adhésive par contre-collage (i) des deux feuilles, (ii) de la feuille et du support, ou (iii) de la feuille et de l'autre couche de matière auto-adhésive, typiquement appliquée sur une feuille ou un support, sur la couche de matière auto-adhésive moussante.

4. Procédé selon l'une des revendications précédentes,
**caractérisé en ce que**
les feuilles ou la feuille occupe (nt) de bout en bout une position plane lors du moussage.

5. Procédé selon l'une des revendications précédentes,
**caractérisé en ce que**
la couche de matière auto-adhésive moussante est entièrement moussée.

6. Procédé selon l'une des revendications précédentes,
**caractérisé en ce que**
l'énergie nécessaire au moussage est transférée par convection, rayonnement tel que rayonnement IR ou UV, ou par conduction thermique au composite formé de la couche de matière auto-adhésive moussante, de la feuille et, le cas échéant, du support et/ou de l'autre couche de matière auto-adhésive.

7. Procédé selon la revendication 6,
**caractérisé en ce que**

l'énergie nécessaire au moussage est transférée uniformément au composite par conduction thermique sur la largeur de la bande, de préférence par le biais d'un ou plusieurs rouleaux chauffés, en particulier une succession d'au moins deux rouleaux chauffés étant utilisée, le composite étant guidé sur les au moins deux rouleaux de telle sorte que les surfaces du composite touchent alternativement d'une face à l'autre les surfaces des rouleaux.

8. Procédé selon la revendication 6,
**caractérisé en ce que**
le composite est moussé dans un tunnel de séchage.

9. Procédé selon la revendication 7 ou 8,
**caractérisé en ce que**
la différence de température du composite sur la largeur de la bande est d'au plus 5K et en particulier d'au plus 2K.

10. Procédé selon l'une des revendications précédentes,
**caractérisé en ce que**
les deux feuilles, indépendamment l'une de l'autre, ou la feuille sont/est une feuille en PET qui comporte un revêtement antiadhésif, tel que du siliconé, au moins sur une face, de préférence sur les deux faces.

11. Procédé selon l'une des revendications précédentes,
**caractérisé en ce que**
le support est un support de film étirable, de préférence en polyoléfine, en polyuréthane ou en caoutchouc tel que le caoutchouc synthétique.

12. Procédé selon l'une des revendications 1 à 10,
**caractérisé en ce que**
le support est un support en film non étirable, de préférence en polyester, en polyamide (PA), en polyimide (PI) ou en polypropylène (PP) étiré sur un axe ou sur deux axes, en particulier en polyester tel que PET.

13. Procédé selon l'une des revendications précédentes,
**caractérisé en ce que**
le composite formé d'une couche de matière auto-adhésive moussante, d'une feuille et éventuellement d'un support et/ou d'une autre couche de matière auto-adhésive est un ruban de transfert, une bande adhésive simple face ou une bande adhésive double face contenant le support.

14. Procédé selon l'une des revendications précédentes,
**caractérisé en ce que**
la couche de matière auto-adhésive au moins partiellement moussée présente une rugosité de surface $R_a$, telle que déterminée à chaque fois dans la partie méthode d'essai, inférieure à 2 $\mu$m, et en particulier inférieure à 1 $\mu$m.

15. Bande adhésive qui comprend au moins une couche de matière auto-adhésive qui est au moins partiellement moussée avec des microballons et qui peut être obtenue par un procédé selon l'une des revendications 1 à 14.

16. Utilisation d'une bande adhésive selon la revendication 15 pour le collage de composants tels que notamment des batteries et des appareils électroniques tels que notamment des appareils mobiles tels que des téléphones portables.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2832780 A1
- JP 2010070655 A
- DE 102008056980 A1
- WO 2009090119 A1
- WO 2003011954 A1
- WO 00006637 A1
- WO 2010147888 A2
- DE 102015206076 A1
- DE 102016202479 A1
- DE 102016209707 A1
- DE 102016207822 A1
- EP 17182443 A
- EP 17182447 A
- DE 102018200957
- WO 2017140801 A1
- EP 3333235 A1

**In der Beschreibung aufgeführte Nicht-Patentliteratur**

- Taschenbuch der Physik erläutert. Taschenbuch der Physik. Verlag Harri, 1994, 102-110